# EUROPÄISCHE PATENTANMELDUNG

(11) **EP 3 150 879 A1**
(43) Veröffentlichungstag der Anmeldung: **05.04.2017**
(21) Anmeldenummer: 16198856.3
(22) Anmeldetag: 25.08.2011
(51) Int. Cl.: F16D 65/12, F16D 65/095, F16D 65/02

(54) **HYDRAULISCHE SCHEIBENBREMSE**

(30) Priorität: 26.08.2010 DE 102010035492; 31.08.2010 DE 102010040045
(62) Teilanmeldung aus: 11748947.6
(71) Anmelder: Gustav Magenwirth GmbH & Co. KG, 72574 Bad Urach (DE)
(72) Erfinder: RUOPP, Michael, 89180 Berghülen (DE); EBERLEIN, Hubert, 72574 Bad Urach (DE); HUJER, Joachim, 72582 Grabenstetten (DE); KÜNSTLE, Reiner, 72555 Metzingen (DE); RUCKH, Stefan, 72587 Römerstein (DE); BEIER, Jürgen, 89081 Ulm (DE)
(74) Vertreter: Friese Goeden Patentanwälte PartGmbB

(57) **Zusammenfassung**

Hydraulische Scheibenbremse für ein lenkergeführtes Fahrzeug, insbesondere ein Fahrrad und/oder Motorrad, die eine Bremsscheibenanordnung (1) mit einem Adapter (10) und einer Bremsscheibe (20) aufweist, wobei der Adapter (10) eine Innenverzahnung (11) zur verdrehsicheren Verbindung mit einer Radnabe des lenkergeführten Fahrzeugs und Mitnehmer (12) zur verdrehsicheren Verbindung mit der Bremsscheibe (20) aufweist, wobei die Bremsscheibenanordnung (1) ein Verbindungsglied (30) zur verliersicheren Verbindung der Bremsscheibe (20) mit dem Adapter (10) aufweist.

## Beschreibung

Die Erfindung betrifft eine Geberarmatur gemäß dem Oberbegriff von Punkt 1, insbesondere eine Geberarmatur für ein Hydraulikbremssystem oder ein Hydraulikkupplungssystem lenkergeführter Fahrzeuge und weiter insbesondere für ein Fahrradhydraulikbremssystem bzw. eine hydraulische Fahrradscheibenbremse.

Der Erfindung liegt die Aufgabe zugrunde, eine Geberarmatur anzugeben, die leicht montierbar ist und/oder bei hoher Qualität ein geringes Gewicht aufweist und/oder einfach und sicher einstellbar ist.

Diese Aufgabe der Erfindung wird mit einer Geberarmatur gemäß den Merkmalen von Punkt 1 gelöst. Vorteilhafte Ausgestaltungen der Erfindung sind in den abhängigen Ansprüchen bzw. der Beschreibung und insbesondere der folgenden Beschreibung angegeben.

Gemäß einer Ausführung der Erfindung wird eine Geberarmatur für ein hydraulisches Bremssystem oder Kupplungssystem angegeben, insbesondere eines lenkergeführten Fahrzeugs, insbesondere eines Fahrrads, mit einem einen Zylinderraum enthaltenden Gehäuse, in dem ein darin verschiebbarer Kolben und ein Druckraum angeordnet ist, und einem Ausgleichsraum, der über zumindest eine Ausgleichsbohrung mit dem Druckraum verbunden ist, einem das Gehäuse verschließenden Deckel und einem Gegenstück zur Befestigung der Geberarmatur an einem Lenkerrohr, und mit zumindest einer Verbindungseinrichtung zur Verbindung des Gegenstücks mit dem Gehäuse der Geberarmatur, wobei die zumindest eine Verbindungseinrichtung einen ersten Verbindungsabschnitt zur Verbindung des Deckels mit dem Gehäuse der Geberarmatur und einen zweiten Verbindungsabschnitt zur Verbindung des Gegenstücks mit der Geberarmatur und zur Befestigung der Geberarmatur an einem Lenkerrohr aufweist.

Diese Ausführung hat den Vorteil, dass infolge der Doppelfunktion der Verbindungseinrichtung zunächst der Deckel sicher mit dem Gehäuse verschlossen werden kann und anschließend das Gegenstück mit dem Gehäuse der Geberarmatur verbunden werden kann, um die Geberarmatur an einem Lenkerrohr zu befestigen, das dabei zwischen dem Deckel und dem Gegenstück angeordnet wird.

Erfindungsgemäß kann zwischen dem ersten Verbindungsabschnitt und dem zweiten Verbindungsabschnitt der zumindest einen Verbindungseinrichtung ein Bund vorgesehen sein. Diese Ausführung hat den Vorteil, dass der Deckel bei der Befestigung der zumindest einen Verbindungseinrichtung an dem Gehäuse der Geberarmatur fest gegen das Gehäuse gepresst werden kann. Dabei kann vorteilhafterweise auch der Ausgleichsraum abgedichtet werden.

Erfindungsgemäß kann an dem Deckel ein Anschlag vorgesehen sein, an dem sich der Bund anschlägt bzw. sich abstützt, um ein weiteres Eindringen der zumindest einen Verbindungseinrichtung in das Gehäuse zu verhindern, wenn der Deckel hinreichend fest mit dem Gehäuse verbunden ist.

Erfindungsgemäß kann die Verbindungseinrichtung bzw. der Bund derart ausgebildet sein, dass der Bund bei der Befestigung der zumindest einen Verbindungseinrichtung an dem Gehäuse den Deckel gegen das Gehäuse presst und damit verbindet. Zwischen Deckel und Gehäuse kann vorzugsweise eine Dichtung vorgesehen sein, die vorzugsweise durch den Rand eines Balgs ausgebildet sein kann, der einen in dem Gehäuse vorgesehenen Ausgleichsraums begrenzt. Der Balg hat dann eine Doppelfunktion, d.h. die Abdichtung des Gehäuses gegen den Deckel und die Begrenzung des Ausgleichsraums.

Erfindungsgemäß können zumindest zwei Verbindungseinrichtungen vorgesehen sein, die vorzugsweise über den Umfang des Deckels gleichverteilt angeordnet sind.

Erfindungsgemäß kann gegenüber der zumindest einen Verbindungseinrichtung eine Gelenkeinrichtung vorgesehen sein, wobei das Gegenstück vorzugsweise derart ausgebildet ist, dass es an der Gelenkeinrichtung angelenkt werden kann und mit der vorzugsweise gegenüberliegenden Seite mit der Geberarmatur verbindbar ist, wobei vorzugsweise das Lenkerrohr zwischen dem Deckel und dem Gegenstück zur Befestigung der Geberarmatur an dem Lenkerrohr eingeklemmt wird.

Erfindungsgemäß kann die mindestens eine Verbindungseinrichtung bzw. können die Verbindungseinrichtungen einen Stehbolzen umfassen.

Erfindungsgemäß kann die mindestens eine Verbindungseinrichtung bzw. können die Verbindungseinrichtungen einen ersten Gewindeabschnitt zur Befestigung des Stehbolzens im Gehäuse umfassen. Alternativ oder zusätzlich kann die Verbindungseinrichtung auch auf eine andere oder zusätzliche Weise mit dem Gehäuse verbunden werden bzw. sein. Beispielsweise kann eine Presspassung vorgesehen werden, mit der die Verbindungseinrichtung in dem Gehäuse befestigt wird und dabei den Deckel an dem Gehäuse der Geberarmatur befestigt. Vorzugsweise wird der Deckel dabei mit einem Bund an das Gehäuse gepresst.

Erfindungsgemäß kann der erste Verbindungsabschnitt eine Steckeinrichtung, die in eine entsprechende Aussparung des Gehäuses eingedreht bzw. eingepresst werden kann, und/oder mit einer Aussparung versehenen Abschnitt aufweisen, in den ein entsprechender Abschnitt des Gehäuses eingreifen kann, um den ersten Verbindungsabschnitt mit dem Gehäuse zu verbinden und dabei den Deckel an das Gehäuse zu pressen. Vorzugsweise weist der Deckel eine Öffnung bzw. eine Bohrung auf, durch die der erste Verbindungsabschnitt bei der Befestigung des Deckels an dem Gehäuse der Geberarmatur hindurchgeführt wird.

Erfindungsgemäß kann der erste Gewindeabschnitt einen bolzenartigen und/oder schraubenartigen Fortsatz bzw. Abschnitt aufweisen, der in eine entsprechende Aufnahme in dem Gehäuse zur Befestigung der Verbindungseinrichtung und des Deckels an dem Gehäuse der Geberarmatur eingreifen kann bzw. dort eingeschraubt bzw. dort eingepresst werden kann.

Alternativ oder zusätzlich kann erfindungsgemäß der erste Gewindeabschnitt einen mutterartigen Fortsatz aufweisen, der in eine entsprechende Aufnahme in dem Gehäuse zur Befestigung der Verbindungseinrichtung und des Deckels an dem Gehäuse der Geberarmatur eingreifen kann bzw. dort eingeschraubt bzw. dort eingepresst werden kann.

Erfindungsgemäß kann der zweite Gewindeabschnitt zur Befestigung von Verbindungsmitteln zur Befestigung des Gegenstücks an dem Deckel bzw. mit dem Gehäuse an dem Lenkerrohr einen bolzenartigen und/oder schraubenartigen Fortsatz aufweisen, mit dem ein mutterartiges Befestigungsmittel zur Befestigung des Gegenstücks verbunden werden kann.

Alternativ oder zusätzlich kann erfindungsgemäß der zweite Gewindeabschnitt zur Befestigung von Verbindungsmitteln zur Befestigung des Gegenstücks an dem Deckel bzw. mit dem Gehäuse an dem Lenkerrohr einen mutterartigen Fortsatz aufweisen, mit dem ein bolzen- und/oder schraubenartiges Befestigungsmittel zur Befestigung des Gegenstücks verbunden werden kann.

Erfindungsgemäß kann die zumindest eine Verbindungseinrichtung einen Spezialwerkzeugeingriff aufweisen, wobei mittels eines Spezialwerkzeugs die zumindest eine Verbindungseinrichtung an dem Gehäuse angebracht werden und dabei der Deckel mit dem Gehäuse verbunden werden kann. Diese Ausführung hat den Vorteil, dass der Benutzer die Geberarmatur nicht öffnen kann. Dadurch ist ein sicherer Betrieb gewährleistet.

Die Erfindung betrifft auch eine hydraulische Scheibenbremse gemäß dem Oberbegriff von Punkt 3 bzw. Anspruch 1.

Der Erfindung liegt auch die Aufgabe zugrunde, eine hydraulische Scheibenbremse anzugeben, die leicht montierbar ist und/oder bei hoher Qualität ein geringes Gewicht aufweist und/oder einfach und sicher einstellbar ist.

Die Aufgabe der Erfindung wird mit einer Scheibenbremse gemäß den Merkmalen von Punkt 28 gelöst. Einzellösungen sind in den unabhängigen Ansprüchen angegeben. Vorteilhafte Ausgestaltungen der Erfindung sind in den abhängigen Ansprüchen bzw. der Beschreibung und insbesondere der folgenden Beschreibung angegeben.

Herkömmliche Bremsscheiben von Fahrradscheibenbremsen weisen in der Mitte einen Ring auf, in dem sechs Befestigungsöffnungen angeordnet sind. Des Weiteren ist es bekannt, Bremsscheiben von Fahrradscheibenbremsen mittels eines Adapters (eines Centerlockadapters bzw. Zentraladapter) an der Radnabe des Fahrrads zu befestigen. Der bekannte Adapter weist eine Innenverzahnung auf, die mit einer Außenverzahnung einer Radnabe zusammenwirkt. Der Adapter weist ferner an seiner Außenseite Vorsprünge auf, die in Aussparungen einer speziell angepassten Bremsscheibe eingreifen. Zur Montage der Bremsscheibe mit einem Centerlockadapter werden der Adapter und die lose damit verbundene Bremsscheibe auf der Radnabe angeordnet und mittels einer Zentralschraube an der Radnabe befestigt, so dass eine feste Verbindung zwischen Radnabe und Bremsscheibe entsteht. Die Zentralschraube weist dazu ein Außengewinde auf, das in ein entsprechendes Innengewinde der Radnabe eingreift.

Diese bekannte Befestigung von Bremsscheiben mit einem Centerlockadapter hat den Nachteil, dass sowohl der Centerlockadapter als auch die Bremsscheibe in der richtigen Position gehalten werden müssen, wenn die Zentralschraube an der Radnabe befestigt wird. Außerdem besteht der Nachteil, dass speziell an dem Centerlockadapter angepasste Bremsscheiben verwendet werden, die nicht für die Befestigung an einer herkömmlichen Radnabe geeignet sind, die nicht für die Verwendung eines Centerlockadapters ausgelegt ist.

Der Erfindung liegt daher auch die Aufgabe zugrunde, eine Bremsscheibenanordnung anzugeben, die leicht an einer Radnabe mit einer Zentralschraube montierbar ist und/oder bei der eine Bremsscheibe verwendet werden kann, die auch an einer Radnabe ohne Centerlockadapter montierbar ist.

Diese Aufgabe der Erfindung wird mit einer hydraulischen Scheibenbremse bzw. einer Bremsscheibenanordnung gemäß Punkt 3 bzw. Anspruch 1 gelöst. Vorteilhafte Ausgestaltungen der Erfindung sind in den von Punkt 3 abhängigen Punkten bzw. den von Anspruch 1 abhängigen Ansprüchen, bzw. der Beschreibung und insbesondere der folgenden Beschreibung angegeben.

Gemäß einer Ausführung der Erfindung wird somit eine Bremsscheibenanordnung für eine hydraulische Scheibenbremse eines lenkergeführten Fahrzeugs, insbesondere eines Fahrrads und/oder Motorrads, mit einem Adapter (bzw. Centerlockadapter bzw. Zentraladapter) und einer Bremsscheibe angegeben, wobei der Adapter eine Innenverzahnung zur verdrehsicheren Verbindung mit einer Radnabe des lenkergeführten Fahrzeugs und Mitnehmer zur verdrehsicheren Verbindung mit der Bremsscheibe aufweist, wobei die Bremsscheibenanordnung ein Verbindungsglied zur verliersicheren Verbindung der Bremsscheibe mit dem Adapter aufweist.

Diese Ausbildung der Bremsscheibenanordnung hat den Vorteil, dass die Bremsscheibe mit dem Adapter eine Einheit bildet, bei der die Bremsscheibe verliersicher mit dem Adapter verbindbar ist. Mit anderen Worten kann die Bremsscheibe durch das Verbindungsglied in einer zumindest im Wesentlichen bezogen auf die Radnabe axialen Richtung mit dem Adapter verbunden werden. Vorzugsweise wird der Adapter dabei mit der Bremsscheibe nur lose verbunden, d.h. die Verbindung sollte ausreichend sein, um zu gewährleisten, dass die Mitnehmer des Adapters in die Bremsscheibe eingreifen. Eine feste Verbindung, d.h. eine Verbindung, die kein axiales Spiel zwischen Adapter und Bremsscheibe ermöglicht, ist nicht notwendig, denn diese wird in der Regel bei der Montage der Bremsscheibenanordnung an der Radnabe erreicht, die beispielsweise mit einer Zentralschraube erfolgen kann, die ein Außengewinde aufweist, das in ein entsprechendes Innengewinde der Radnabe eingreift. Durch das Anziehen der Zentralschraube wird die Bremsscheibenanordnung fest mit der Radnabe verbunden. Dabei erfolgt auch eine feste axiale Verbindung zwischen dem Adapter und der Bremsscheibe. Die lose Verbindung zwischen Adapter und Bremsscheibe durch das Verbindungsglied hat den weiteren Vorteil, dass bei einem Bremsscheibenwechsel das Verbindungsglied leicht wieder gelöst werden kann, indem beispielsweise gegebenenfalls vorhandene Rast- und/oder Sicherungsmittel gelöst und das Verbindungsglied abgezogen wird. Die Rast- und/oder Sicherungsmittel können beispielsweise Haken bzw. Rasthaken sein, die Teil eines Federrings sind und beispielsweise durch Öffnungen der Bremsscheibe hindurch greifen und eine Schulter des Adapters hintergreifen.

Erfindungsgemäß kann der Mitnehmer bzw. können die Mitnehmer des Adapters in axialer Richtung vorstehen, und zwar vorzugsweise um die Dicke der Bremsscheibe, so dass sich vorzugsweise eine ebene Fläche aus der Bremsscheibe und den Mitnehmern ergibt, die in die Bremsscheibe eingreifen. Vorzugsweise greifen die Mitnehmer des Adapters zwischen Öffnungen der Bremsscheibe ein, die zur Befestigung der Bremsscheibe mit Schrauben an herkömmlichen Naben dienen.

Erfindungsgemäß können die Sicherungsmittel des Verbindungsglieds entlang der Außenfläche des Adapters verlaufen, und zwar vorzugsweise in einem Abstand von der Achse, der den Abstand der Öffnungen der Bremsscheibe entspricht, die zur Befestigung der Bremsscheibe mit Schrauben an herkömmlichen Naben dienen. Die Ausführungen der Erfindung, bei denen die Sicherungsmittel außerhalb des Adapters verlaufen und außen an dem Adapter vorzugsweise an einer Schulter angreifen, haben den Vorteil, dass sie besonders leicht bauend sind, weil der Adapter eine geringe radiale Ausdehnung aufweisen kann. Die Mitnehmer sind dabei vorzugsweise außen an einem ringförmigen bzw. kreisringförmigen Adapter angebracht und erstrecken sich von diesem in Richtung der Bremsscheibe, und zwar vorzugsweise um eine Länge, die der Dicke der Bremsscheibe entspricht.

Erfindungsgemäß kann die Bremsscheibe zwischen dem Adapter und dem Verbindungsglied angeordnet sein und/oder das Verbindungsglied zumindest ein Verbindungselement aufweisen, das durch eine Öffnung der Bremsscheibe verlaufend und mit dem Adapter in Eingriff anordbar ist.

Das zumindest eine Verbindungselement kann vorzugsweise ein Haken bzw. ein mit einem Haken und/oder einer Hinterschneidung versehener Vorsprung bzw. Arm sein, der sich insbesondere bezogen auf die Radnabe in axialer Richtung erstreckt. Vorzugsweise weist das Verbindungselement eine derartige Abmessung auf, dass es durch die Befestigungsöffnungen einer herkömmlichen Bremsscheibe gesteckt werden kann.

Erfindungsgemäß kann das Verbindungsglied zumindest ein Sicherungselement zur Verdrehsicherung einer Zentralschraube aufweisen, mit der die Bremsscheibenanordnung an einer Radnabe befestigbar ist.

Das Verbindungsglied kann einen Ring aufweisen, der parallel zur Bremsscheibe angeordnet ist. Vorteilhafterweise ist dabei das zumindest eine Sicherungselement auf der Außenseite des Rings angeordnet, d.h. derjenigen Seite des Rings, der bei montierter Bremsscheibenanordnung an die Zentralschraube angrenzt. Vorzugsweise weist das Verbindungsglied mehrere Sicherungselemente auf, die vorteilhafterweise im Wesentlichen gleichmäßig auf dem Ring verteilt sind. Erfindungsgemäß kann der Ring Bereiche aufweisen, in denen die Sicherungselemente angeordnet sind. Dabei kann der Ring in diesen Bereichen breiter ausgebildet sein bzw. Fortsätze aufweisen. Zwischen diesen Bereichen können die Verbindungselemente angeordnet sein. Bei einer Ausführung der Erfindung sind sechs Verbindungselemente vorgesehen, die jeweils in eine Öffnung einer Bremsscheibe eingreifen, die zur herkömmlichen Befestigung der Bremsscheibe ohne Zentraladapter verwendet werden können. Es ist klar, dass auch weniger oder mehr Verbindungselemente vorgesehen werden können. Beispielsweise könnte auch nur ein Verbindungselement vorgesehen werden, mit dem die Bremsscheibe an dem Adapter verliersicher befestigt werden kann. Bevorzugter sind Ausführungen mit zumindest zwei Verbindungselementen, die vorzugsweise gegenüberliegend angeordnet sind, d.h. in Umfangsrichtung um 180 Grad. Denkbar sind auch Ausführungen mit beispielsweise drei Verbindungselementen, die vorzugsweise über den Umfang gleichverteilt angeordnet sind, d.h. in Umfangsrichtung um 120 Grad versetzt.

Hydraulische Fahrradscheibenbremsen mit einer Bremszange, einer Bremsleitung, einem mit der Bremsleitung verbundenen Anschlussglied, das einen ringförmigen Kopf aufweist, und einem Verbindungsglied zur Verbindung des Anschlussglieds mit der Bremszange sind bekannt. Das Verbindungsglied zur Verbindung des Anschlussglieds mit der Bremszange ist bei den bekannten hydraulischen Fahrradscheibenbremsen eine Hohlschraube, die durch den ringförmigen Kopf des Anschlussglieds ragt und die Bremsleitung über das hohle Innere der Hohlschraube mit Hydraulikkanälen verbindet, die zu den Druckräumen der Bremszange führen. Die Hohlschrauben haben die Doppelfunktion, das Anschlussglied seitlich an der Bremszange zu befestigen und eine hydraulische Verbindung herzustellen.

Diese bekannten hydraulischen Scheibenbremsen haben den Nachteil, dass die Hohlschraube relativ groß bemessen werden muss, um eine sichere und hinreichend stabile Verbindung zwischen dem Anschlussglied und der Bremszange zu gewährleisten. Dadurch ergibt sich ein relativ großes Gewicht.

Der Erfindung liegt daher auch die Aufgabe zugrunde, eine hydraulische Scheibenbremse anzugeben, die bei einem geringen Gewicht eine sichere und zuverlässige Funktion gewährleistet.

Diese Aufgabe der Erfindung wird mit einer hydraulischen Scheibenbremse bzw. eine Bremszange gemäß dem Merkmal von Punkt 6 gelöst. Vorteilhafte Ausgestaltungen der Erfindung sind in den abhängigen Ansprüchen bzw. der Beschreibung und insbesondere der folgenden Beschreibung angegeben.

Gemäß einer Ausführung der Erfindung wird eine hydraulische Scheibenbremse für ein lenkergeführtes Fahrzeug angegeben, insbesondere für ein Fahrrad und/oder ein Motorrad, die eine Bremszange mit einem Druckraum, einer Hydraulikanschlussbohrung und zumindest einem Hydraulikkanal, der von einem Verbindungsabschnitt der Hydraulikanschlussbohrung zu dem zumindest einen Druckraum verläuft, eine Bremsleitung, ein mit der Bremsleitung verbundenes Anschlussglied, das einen ringförmigen Kopf aufweist, und ein in der Hydraulikanschlussbohrung angeordnetes Verbindungsglied aufweist, wobei das Verbindungsglied einen Verbindungsbereich aufweist, der in dem Kopf zur hydraulischen Verbindung der Bremsleitung mit dem Verbindungsglied angeordnet ist, wobei das Verbindungsglied eine Außenverzahnung und/oder an seinem Außenbereich zumindest eine Nut und/oder Abflachung aufweist, die den Verbindungsbereich mit dem Verbindungsabschnitt hydraulisch verbindet.

Diese Ausführung der Erfindung hat den Vorteil, dass die Verbindung zwischen Anschlussglied und Bremszange bei gleicher Dimensionierung des Verbindungsglieds stabiler ist bzw. ein Verbindungsglied mit geringeren Abmessungen eingesetzt werden kann, wodurch sich bei gleicher Stabilität ein geringeres Gewicht der hydraulischen Scheibenbremse ergibt.

Erfindungsgemäß können zwischen dem ringförmigen Kopf des Anschlussglieds und dem Verbindungsbereich des Verbindungsglieds Dichtungselemente vorgesehen sein, die in axialer Richtung des Verbindungsglieds und gegebenenfalls in radialer Richtung des Verbindungsglieds abdichten.

Bei bekannten Bremszangen von Bremsscheiben für Fahrräder ist die Hydraulikanschlussbohrung in einer Richtung parallel zu der Achse der Bremszangenzylinder ausgebildet, in denen die Bremskolben angeordnet sind und auf Bremsbeläge einwirken, um diese mit einem Bremsband einer Bremsscheibe in Eingriff zu bringen. Die Bremsleitung wird bei den bekannten hydraulischen Scheibenbremsen zum Schutz vor Beschädigungen bei Stürzen auf der Innenseite des festen Rahmenteils, an dem die Bremszange befestigt wird, angeordnet. Es besteht die Gefahr, dass die Bremsleitung mit den Speichen des Laufrads in Eingriff kommt. Um das zu vermeiden, wird bei den bekannten hydraulischen Scheibenbremsen die Bremsleitung mit einem abgewinkelten Anschlussglied an der Bremszange befestigt, um die Bremsleitung seitlich nach außen weg von dem Laufrad zu führen. Dadurch ergibt sich der Nachteil, dass die Bremsleitung nur in einem bestimmten Winkel von der Bremszange weggeführt werden kann, der durch den Winkel in dem Anschlussglied definiert ist.

Der Erfindung liegt daher die Aufgabe zugrunde, eine hydraulische Fahrradscheibenbremse anzugeben, bei der der Winkel, in dem die Bremsleitung von der Bremszange weggeführt wird, innerhalb eines gewissen Bereichs leicht einstellbar ist. Des Weiteren liegt der Erfindung auch die Aufgabe zugrunde, eine hydraulische Fahrradscheibenbremse anzugeben, bei der der Anschluss der Bremsleitung an der Bremszange einen leichten und sicheren Aufbau hat. Die erste und/oder zweite Aufgabe der vorliegenden Erfindung wird mit einer hydraulischen Scheibenbremse gemäß den Merkmalen von Punkt 8 gelöst. Vorteilhafte Ausgestaltungen sind in den abhängigen Ansprüchen bzw. der Beschreibung und insbesondere der folgenden Beschreibung angegeben.

Gemäß einer Ausführung der Erfindung wird eine hydraulische Scheibenbremse für ein lenkergeführtes Fahrzeug, insbesondere ein Fahrrad und/oder Motorrad, mit einer Bremszange angegeben, die einen Druckraum, eine Hydraulikanschlussbohrung und zumindest einen Hydraulikkanal aufweist, der von einem Verbindungsabschnitt der Hydraulikanschlussbohrung zu dem zumindest einen Druckraum verläuft, einer Bremsleitung und einem mit der Bremsleitung verbundenem Anschlussglied, das einen ringförmigen Kopf aufweist, wobei die Hydraulikanschlussbohrung in einer Richtung verläuft, die einen Winkel von ungefähr 5 bis 30 Grad relativ zu der Richtung des zumindest einen Bremszangenzylinders aufweist, und/oder wobei sich das Anschlussglied in einer Richtung erstreckt, die einen Winkel von ungefähr 5 bis 30 Grad relativ zu einer Richtung aufweist, die senkrecht zu der Richtung der Achse des zumindest einen Bremszangenzylinders ist.

Diese Ausführung der Erfindung hat den Vorteil, dass eine Änderung des Winkels durch drehen des Anschlussglieds um die Achse der Hydraulikanschlussbohrung erfolgen kann, damit die Bremsleitung von der Bremszange in einem gewünschten Winkel weggeführt werden kann.

Erfindungsgemäß kann der Winkel zwischen der Richtung der Hydraulikanschlussbohrung und der Richtung des zumindest einen Bremszangenzylinders ungefähr 5 bis 20 Grad und vorzugsweise ungefähr 10 Grad betragen, und/oder kann der Winkel zwischen der Richtung, in der sich das Anschlussglied erstreckt, und der Richtung, die senkrecht zu der Richtung der Achse des zumindest einen Bremszangenzylinders ist, ungefähr 5 bis 20 Grad und vorzugsweise ungefähr 10 Grad betragen.

Erfindungsgemäß kann die hydraulische Bremse ein Verbindungsglied aufweisen, das vorzugsweise gemäß den oben genannten Merkmalen ausgebildet ist. Erfindungsgemäß kann das Verbindungsglied in der Hydraulikanschlussbohrung aufgenommen sein. Erfindungsgemäß kann der ringförmige Kopf des Anschlussglieds das Verbindungsglied derart umschließen, dass das Anschlussglied um die Achse des Verbindungsglieds bzw. der Hydraulikanschlussbohrung drehbar gelagert ist.

Erfindungsgemäß kann das Anschlussglied gerade ausgebildet sein. Infolge der winkeligen Anordnung der Hydraulikanschlussbohrung ergibt sich der Vorteil, dass sich der Winkel, in dem die Hydraulikleitung sich von der Bremszange weg erstreckt, durch Drehen der Hydraulikleitung um das Verbindungsglied verändert werden kann.

Bei Scheibenbremsen ist es bekannt, offene Bremssysteme zu verwenden, das heißt, dass ein Ausgleichsraum vorgesehen wird. Üblicherweise wird daher bei der Geberarmatur für ein hydraulisches Bremssystem für ein Zweirad ein externer Ausgleichsbehälter vorgesehen, der mit dem Zylinderraum der Geberarmatur verbunden ist. Das hat den Nachteil, dass das hydraulische Bremssystem relativ viel Gewicht aufweist und ein großer Platzbedarf besteht. Außerdem gibt es von der Geberarmatur vorstehende Teile. Insbesondere im Mountain-Bike-Bereich und im Motorradsport ist es jedoch wünschenswert, möglichst leicht bauende Systeme zu verwenden, die möglichst wenige vorstehende Teile aufweisen.

Der Erfindung liegt daher die Aufgabe zugrunde, eine Geberarmatur anzugeben, die leichtgewichtig ist und möglichst wenig vorstehende Teile hat.

Der Vorteil der Ausführung der Erfindung besteht darin, dass der Ausgleichsraum in der Geberarmatur integriert werden kann und gleichzeitig ein hinreichendes Volumen geschaffen werden kann und keine vorstehenden Teile für den Ausgleichsraum benötigt werden.

Gemäß einigen Ausführungen der Erfindung wird eine Geberarmatur für ein hydraulisches Bremssystem bzw. Kupplungssystem mit einem Zylinderraum, in dem ein Druckraum angeordnet ist, und einem Ausgleichsraum angegeben, der über zumindest eine Ausgleichsbohrung mit dem Druckraum verbunden ist,
wobei zumindest eine weitere Ausgleichsbohrung vorgesehen ist, die den Druckraum mit dem Ausgleichsraum verbindet, und/oder der Ausgleichsraum zwischen der zylinderförmigen Wand des Zylinderraums und der Gehäusewand des den Zylinderraum aufnehmenden Gehäuses der Geberarmatur vorgesehen ist, und/oder
wobei zwischen der den Zylinderraum abgrenzenden zylinderförmigen Wand und einer den Ausgleichsraum definierenden Wandung (die insbesondere eine Wand des Gehäuses der Geberarmatur sein kann) zumindest ein Steg und/oder eine Rippe vorgesehen ist, die die Ausgleichsraumwand mit der Zylinderraumwand verbindet, und/oder
wobei der Ausgleichsraum zumindest teilweise die zylinderförmige Wand des Zylinderraums umschließt, und/oder
wobei der Ausgleichsraum in zumindest zwei Sektoren unterteilt ist, die seitlich von der zylinderförmigen den Zylinderraum begrenzenden Wand angeordnet sind.

Diese Ausführungen der Erfindung haben den Vorteil, dass die Geberarmatur mit dem Ausgleichsraum extrem kompakt gebaut werden kann, wobei gleichzeitig ein hinreichendes Volumen für den Ausgleichsraum zur Verfügung gestellt wird. Außerdem ist eine hinreichende Stabilität gegeben.

Beispielsweise kann der Ausgleichsraum zumindest 90° des Zylinderraums umschließen, weiter vorzugsweise zumindest 120°, weiter vorzugsweise zumindest 150°, weiter vorzugsweise zumindest 180°, weiter vorzugsweise zumindest 210°, weiter vorzugsweise zumindest 240°, weiter vorzugsweise zumindest 270°, weiter vorzugsweise zumindest 300°, weiter vorzugsweise zumindest 330° und bevorzugt den gesamten Umfang des Zylinderraums umschließen.

Der Begriff zylinderförmige den Zylinderraum begrenzende Wand ist im Zusammenhang mit dem vorliegenden Schutzrecht so zu verstehen, dass die Innenseite der den Zylinderraum definierenden Wand, an der ein Kolben bei der Betätigung der Geberarmatur entlang gleitet und üblicherweise über eine Dichtung abgedichtet ist, gemeint ist.

Die Außenseite der zylinderförmigen den Zylinderraum begrenzenden Wand kann selbstverständlich auch eine unebene Form aufweisen. Vorteilhafterweise ist die Außenwand auch im Wesentlichen zylinderförmig, damit ein möglichst großes Volumen für den Ausgleichsraum zur Verfügung steht.

Eine Verbindung zwischen dem Ausgleichsraum und dem Druckraum über die Ausgleichsbohrungen findet solange statt, wie die Dichtung des Kolbens die Ausgleichsbohrungen nicht überfahren hat. Vorteilhafterweise sind die in den Zylinderraum mündenden Öffnungen der Ausgleichsbohrungen zumindest etwa an der bezogen auf die Bewegungsrichtung des Kolbens gleichen Stelle angeordnet, damit die Öffnungen der Ausgleichsbohrungen gleichzeitig überfahren werden.

Erfindungsgemäß kann der Ausgleichsraum über zumindest zwei Stege in drei Sektoren aufgeteilt sein. Beispielsweise können die Sektoren gleichmäßig um die zylinderförmige Wand des Zylinderraums verteilt sein, so dass sie beispielsweise jeweils einen Sektor von 120° aufweisen. Es ist klar, dass von den 120° ein paar Grad abzuziehen sind, die durch die Stärke des den Sektor begrenzenden Stegs bestimmt sind.

Gemäß einer bevorzugten Ausführungsform der Erfindung kann der Ausgleichsraum in vier Sektoren unterteilt sein, die jeweils ungefähr 90° aufweisen und durch vier gleichmäßig um den Umfang des Zylinderraums angeordnete Stege zumindest im unteren Bereich unterteilt sind.

Erfindungsgemäß können die einzelnen Sektoren des Ausgleichsraums oberhalb der die den Ausgleichsraum in Sektoren unterteilenden Stege miteinander verbunden sein. Das hat den Vorteil, dass die Ausgleichsraumsektoren mit einem einzigen Balg abgedichtet werden können.

Bekannte Bremszangen von hydraulischen Scheibenbremsen weisen einen Scheibenraum und eine Bremsbelagaufnahme auf, die oberhalb des Scheibenraums angeordnet sind. Die bekannten Bremszangen weisen zwei Seitenabschnitte auf, die den Scheibenraum seitlich begrenzen. Sie weist ferner einen Hydraulikanschlussbereich auf, der die beiden Seitenbereiche mit einander verbindet. Derartige Bremszangen hydraulischer Scheibenbremsen haben den Nachteil, dass die Bremszangen relativ groß und schwer ausgebildet sein müssen, um eine hinreichende Steifigkeit zu erreichen.

Der Erfindung liegt daher auch die Aufgabe zugrunde, eine hydraulische Scheibenbremse mit einer Bremszange anzugeben, die bei einer hohen Stabilität und Steifigkeit relativ leicht ausgebildet ist.

Diese Aufgabe der Erfindung wird mit einer hydraulischen Scheibenbremse bzw. einer Bremszange gemäß Punkt 11 gelöst. Vorteilhafte Ausgestaltungen der Erfindung sind in den abhängigen Ansprüchen bzw. der Beschreibung und insbesondere der folgenden Beschreibung angegeben.

Gemäß der Erfindung wird auch eine hydraulische Scheibenbremse mit einer Bremszange angegeben, die einen Scheibenraum und eine Bremsbelagaufnahme aufweist, die oberhalb des Scheibenraums angeordnet ist, wobei die Bremszange zwei Seitenabschnitte aufweist, die den Scheibenraum seitlich begrenzen, und einen Hydraulikanschlussbereich aufweist, der die beiden Seitenbereiche mit einander verbindet, wobei die Bremszange einen Verbindungsabschnitt zur Verbindung der beiden Seitenabschnitte aufweist, wobei die Bremsbelagaufnahme zwischen dem Hydraulikanschlussabschnitt und dem Verbindungsabschnitt angeordnet ist.

Erfindungsgemäß kann der Verbindungsabschnitt bezogen auf den Zylinderraum außermittig angeordnet sein.

Erfindungsgemäß kann der Verbindungsabschnitt mit dem Hydraulikanschlussabschnitt einen Winkel von weniger als 120°, vorzugsweise von weniger als 100°, weiter vorzugsweise von weniger als 90°, weiter vorzugsweise von weniger als 80° und bevorzugt von ungefähr 70° einschließen.

Erfindungsgemäß können der Hydraulikanschlussabschnitt und der Verbindungsabschnitt einen Winkel von mehr als 50°, vorzugsweise von mehr als 60° und bevorzugt von ungefähr 70° einschließen.

Erfindungsgemäß können der Hydraulikanschlussabschnitt und/oder der Verbindungsabschnitt im Wesentlichen entlang einer Tangente des Zylinderraums und/oder im Wesentlichen entlang einer Tangente des Bremszangengehäuses im Bereich des Zylinderraums angeordnet sein.

Erfindungsgemäß kann der Hydraulikanschluss an die erfindungsgemäße Bremszange auch an einer anderen Stelle außerhalb des in den Ausführungsbeispielen gezeigten Hydraulikanschlussbereiches angeordnet sein. Entscheidend ist, dass die Bremszange zwei Versteifungsbereiche bzw. Bügel aufweist, die die beiden den Scheibenlauf begrenzenden Seiten der Bremszange mit einander verbinden. Vorteilhafterweise können die Bügel entsprechend den Versteifungsbügeln von Federgabeln angeordnet sein.

Gemäß der Erfindung wird somit auch eine Bremszange angegeben, die zwei einen Scheibenraum begrenzende Seitenwandabschnitte aufweist, wobei in zumindest einem Seitenwandabschnitt ein einen Kolben aufnehmender Zylinderraum ausgebildet ist, wobei die beiden Seitenwandabschnitte miteinander verbunden sind, wobei die Bremszange einen ersten und einen zweiten Versteifungsbereich und/oder ersten und zweiten Bügel und/oder ersten und zweiten Bogenabschnitt aufweist, die die Seitenwandabschnitte der Bremszange miteinander verbinden.

Erfindungsgemäß können die Versteifungsbereiche bzw. Bögen bzw. Bügel derart angeordnet sein, dass sie in Ebenen verlaufen, die in einem Winkel von ungefähr 120 bis 30° zu einander verlaufen, vorzugsweise in einem Winkel zwischen 100 und 40°, weiter vorzugsweise in einem Winkel von 80 bis 50° und bevorzugt an einem Winkel von ungefähr 60° zu einander verlaufen.

Erfindungsgemäß können die Verstärkungsbereiche und/oder Bügel und/oder Bögen auf Ebenen angeordnet sein, die außerhalb der Mittelachse der Kolbenbohrung des Zylinders verlaufen. Vorzugsweise verlaufen die Ebenen, auf denen die Verstärkungsbereiche, Bügel und/oder Bögen angeordnet sind, im Wesentlichen ungefähr tangential zu der Kolbenbohrung des Zylinders der Bremszange.

Erfindungsgemäß können die Verbindungsbereiche und/oder Bögen und/oder Bügel in einem Winkel von ungefähr 15 bis 60°, vorzugsweise in einem Winkel von 20 bis 50°, weiter vorzugsweise in einem Winkel von 25 bis 40° und bevorzugt in einem Winkel von ungefähr 30° zu der Winkelhalbierenden der Ebenen, in denen die Versteifungsbereiche und/oder Bügel und/oder Bögen liegen, verlaufen. Vorzugsweise können die beiden Winkel ungefähr gleich groß sein.

Erfindungsgemäß können die Versteifungsbereiche, Bügel und/oder Bögen, eine größere Höhe als Breite aufweisen.

Die Höhe der Verstärkungsbereiche und/oder Bügel und/oder Bögen ist die Abmessung der Verstärkungsbereiche und/oder Bügel und/oder Bögen in einer bezogen auf die Bremsscheibe radial nach außen verlaufenden Richtung. Die Stärke bzw. Breite der Verstärkungsbereiche und/oder Versteifungsbereiche und/oder Bügel und/oder Bögen ist im Zusammenhang mit der vorliegenden Anmeldung als die Abmessung der Verstärkungsbereiche und/oder Versteifungsbereiche und/oder Bügel und/oder Bögen in Umfangsrichtung der Bremsscheibe zu verstehen.

Erfindungsgemäß können die Verstärkungsbereiche und/oder Versteifungsbereiche und/oder Bügel und/oder Bögen eine Abmessung in der Höhe aufweisen, die ungefähr das mindestens 1,2-fache, vorzugsweise das mindestens 1,5-fache, weiter vorzugsweise das ungefähr 1,75-fache und bevorzugst das Doppelte der Stärke der Verbindungsbereiche und/oder Versteifungsbereiche und/oder Bügel und/oder Bögen aufweist.

Erfindungsgemäß kann die Höhe der Verstärkungsbereiche und/oder Versteifungsbereiche und/oder Bügel und/oder Bögen mindestens das 5-fache, vorzugsweise höchstens das 4-fache, weiter vorzugsweise höchstens das 3-fache und bevorzugt ungefähr das Doppelte der Stärke der Verbindungsbereiche und/oder Versteifungsbereiche und/oder Bügel und/oder Bögen betragen.

Der Erfindung liegt auch die Aufgabe zu Grunde, eine Geberarmatur anzugeben, bei der der Druckpunkt und die Griffweite bei einem kostengünstigen Aufbau leicht einstellbar sind.

Diese Aufgabe der Erfindung wird mit einer Geberarmatur gemäß den Merkmalen von Punkt 16 gelöst. Vorteilhafte Ausgestaltungen sind in den abhängigen Ansprüchen bzw. der Beschreibung und insbesondere der folgenden Beschreibung angegeben.

Gemäß einer Ausführung der Erfindung wird eine Geberarmatur für eine hydraulische Bremse oder Kupplung angegeben, die einen Bremshebel und ein Zylindergehäuse aufweist, in dem ein Kolben verschiebbar angeordnet ist, der über eine Spindel mit dem Bremshebel verbunden ist, wobei die Geberarmatur eine Einstellvorrichtung zum Einstellen der Griffweite und des Druckpunkts aufweist, wobei die Einstellvorrichtung ein Betätigungselement aufweist, mit dem in einer ersten Stellung die Griffweite und in einer zweiten Stellung der Druckpunkt einstellbar ist.

Die erfindungsgemäße Geberarmatur hat den Vorteil, dass in Folge der Doppelfunktion des Betätigungselements die Einstellvorrichtung sehr kompakt und kleinbauend ausgebildet werden kann. Dadurch können Gewicht und Kosten eingespart werden. Außerdem ist die Einstellung sehr einfach.

Erfindungsgemäß kann das Betätigungselement mit einer Federvorrichtung in die erste Stellung zur Einstellung der Griffweite und/oder in die zweite Stellung zur Einstellung des Druckpunkts vorgespannt werden. Erfindungsgemäß kann die Einstellvorrichtung derart ausgebildet sein, dass das Betätigungselement in der Einstellung mit einer Rasthülse in Eingriff bringbar ist, die ein zweites Element umgibt, das mit dem Betätigungselement in der anderen Stellung in Eingriff bringbar ist. Diese Ausführung der Erfindung hat den Vorteil einer äußerst kompakten Bauweise mit dem damit verbundenen geringen Gewicht.

Erfindungsgemäß kann das Betätigungselement ein Drehknopf sein, der in der ersten Stellung mit einem ersten Einstellglied drehfest verbunden ist, und einer zweiten Stellung mit einem zweiten Einstellglied drehfest verbunden ist.

Erfindungsgemäß kann das Betätigungselement von der ersten Stellung in die zweite Stellung durch Drücken des Betätigungselements geführt werden.

Erfindungsgemäß kann das Betätigungselement zum Einstellen in der ersten Stellung und/oder in der zweiten Stellung gedreht werden, um das mit dem Betätigungselement drehfest verbundene Einstellglied zu drehen.

Der Erfindung liegt auch die Aufgabe zu Grunde, eine Geberarmatur anzugeben, bei der die Griffweite bei einem kostengünstigen Aufbau leicht einstellbar ist.

Diese Aufgabe der Erfindung wird mit einer Geberarmatur gemäß den Merkmalen von Punkt 17 gelöst. Vorteilhafte Ausgestaltungen sind in den abhängigen Ansprüchen bzw. der Beschreibung und insbesondere der folgenden Beschreibung angegeben.

Gemäß einer Ausführung der Erfindung wird eine Geberarmatur für eine hydraulische Bremse oder Kupplung, die einen Hebel, ein Druckstück und ein Zylindergehäuse aufweist, in dem ein Kolben verschiebbar angeordnet ist, wobei der Kolben mit dem Druckstück über eine Spindel verbunden ist, wobei die Geberarmatur eine Einstellvorrichtung zum Einstellen der Griffweite durch Verstellen des Winkels zwischen dem Hebel und dem Druckstück aufweist, wobei sich die Einstellvorrichtung auf dem Druckstück abstützt, wobei die Einstellvorrichtung einen Abstandshalter aufweist, der sich auf dem Druckstück abstützt und der durch das Druckstück gegen eine Verdrehung gesichert ist.

Diese Ausführung der Erfindung hat den Vorteil einer kompakten Bauweise, die ein geringes Gewicht und geringe Kosten bedient.

Erfindungsgemäß kann der Abstandshalter einen Fortsatz aufweisen, der zwischen einem Bereich des Druckstücks angeordnet ist, der im Wesentlichen gabelförmig ausgebildet ist und/oder zwischen zwei Fortsätzen des Druckstücks angeordnet ist, derart, dass der Abstandshalter gegen Drehen gesichert ist.

Erfindungsgemäß kann der Abstandshalter einen Punkt bzw. Flansch aufweisen, der sich seitlich von dem Abstandshalter weg erstreckt und sich auf dem Druckstück abstützt. Seitlich heißt in diesem Zusammenhang senkrecht zu der Ebene, in der der Hebel und das Druckstück bei der Betätigung der Geberarmatur geschwenkt bzw. gedreht wird.

Der Erfindung liegt auch die Aufgabe zu Grunde, eine Geberarmatur anzugeben, bei der der Druckpunkt bei einem kostengünstigen Aufbau leicht einstellbar ist.

Diese Aufgabe der Erfindung wird mit einer Geberarmatur gemäß den Merkmalen von Punkt 18 gelöst. Vorteilhafte Ausgestaltungen sind in den abhängigen Ansprüchen bzw. der Beschreibung und insbesondere der folgenden Beschreibung angegeben.

Gemäß einer Ausführung der Erfindung wird eine Geberarmatur für eine hydraulische Bremse oder Kupplung, die einen Hebel und ein Zylindergehäuse aufweist, in dem ein Kolben verschiebbar angeordnet ist, wobei der Kolben über eine Spindel mit dem Hebel verbunden ist, wobei die Geberarmatur eine Druckpunkteinstellvorrichtung aufweist, wobei die Druckpunkteinstellvorrichtung derart angeordnet und ausgebildet ist, dass der Endanschlag des Kolbens an dem Gehäuse einstellbar ist.

Erfindungsgemäß kann die Einstellvorrichtung ein mit dem Gehäuse drehfestes Anschlagglied aufweisen, das axial gegenüber dem Gehäuse verschiebbar angeordnet ist, und/oder kann die Einstellvorrichtung ein Einstellglied aufweisen, das relativ zu dem Zylindergehäuse verdrehbar angeordnet ist, und dessen Bewegung in axialer Richtung bezogen auf den Zylinder begrenzt ist.

Erfindungsgemäß kann die Begrenzung des Einstellglieds in axialer Richtung durch einen Stift erfolgen, der in dem Gehäuse gelagert ist.

Der Erfindung liegt auch die Aufgabe zu Grunde, eine Geberarmatur anzugeben, bei der die Kolbenstellung bei einem kostengünstigen Aufbau leicht erfassbar ist.

Diese Aufgabe der Erfindung wird mit einer Geberarmatur gemäß den Merkmalen von Punkt 20 gelöst. Vorteilhafte Ausgestaltungen sind in den abhängigen Ansprüchen bzw. der Beschreibung und insbesondere der folgenden Beschreibung angegeben.

Gemäß einer Ausführung der Erfindung wird eine Geberarmatur für eine hydraulische Bremse oder Kupplung, die einen Hebel und ein Zylindergehäuse aufweist, in dem ein Kolben verschiebbar angeordnet ist, wobei der Kolben gegen Drehen in dem Zylindergehäuse gesichert ist, und das die Kolbenlageerfassungseinrichtung ein bezogen auf den Umfang des Kolbens asymmetrisch angeordnetes Signalglied und ein dem Signalglied zugeordnetes und/oder diesem gegenüberliegendes Erfassungsglied aufweist.

Erfindungsgemäß kann das Signalglied ein Stabmagnet und das Erfassungsglied ein Hallsensor sein. Diese Ausführung der Erfindung hat den Vorteil, dass die Kolbenlageerfassungseinrichtung einfach und kostengünstig ausgebildet werden kann. Es ist insbesondere nicht notwendig, eine bezogen auf dem Umfang des Kolbens und des Gehäuses symmetrische Anordnung bereit zu stellen, um nur eine richtige Erfassung der Lage in axialer Richtung des Kolbens zu erhalten, auch wenn der Kolben in dem Gehäuse gedreht wird.

Erfindungsgemäß können die erfindungsgemäßen Geberarmaturen für hydraulische Bremsen oder Kupplungen verwendet werden bzw. Teil davon sein. Insbesondere können die erfindungsgemäßen Geberarmaturen Teile von hydraulischen Scheibenbremsen oder Felgenbremsen von Fahrrädern oder anderen lenkergeführten Fahrzeugen sein bzw. dafür verwendet werden.

Erfindungsgemäß kann das Material des Gehäuses der Geberarmatur bzw. der Bremszange Druckguss und/oder faserverstärkten Kunststoff, insbesondere einen kohlefaserverstärkten Kunststoff, beispielsweise einen Duroplast und/oder einen Thermoplast, aufweisen.

Der Erfindung liegt auch die Aufgabe zu Grunde, eine hydraulische Scheibenbremse anzugeben, bei der Bremsbeläge bei einem kostengünstigen Aufbau schnell und leicht montierbar bzw. auswechselbar sind.

Diese Aufgabe der Erfindung wird mit einer hydraulischen Scheibenbremse gemäß den Merkmalen von Punkt 21 bzw. einem Bremsbelag gemäß den Merkmalen von Punkt 25 gelöst. Vorteilhafte Ausgestaltungen sind in den abhängigen Ansprüchen bzw. der Beschreibung und insbesondere der folgenden Beschreibung angegeben.

Gemäß einer Ausführung der Erfindung wird eine hydraulische Scheibenbremse mit einer Bremszange angegeben, die einen Scheibenraum und eine Bremsbelagaufnahme aufweist, die oberhalb des Scheibenraums angeordnet ist, wobei die Bremsbelagaufnahme einen Abstand zu der Mittelebene des Scheibenraums aufweist, der größer oder gleich der Hälfte der Dicke eines Bremsbelags ist.

Die erfindungsgemäße Ausgestaltung hat den Vorteil, dass der Bremsbelag von unten in den Schacht der Bremszange eingeführt und seitlich auf die Bremsbelagaufnahme geschoben werden kann, wo er dann vorteilhaft durch die Bremsscheibe gesichert wird. Erfindungsgemäß können die beiden Bremsbeläge in entgegengesetzte Richtungen geschoben werden.

Erfindungsgemäß kann die Bremszange einen Schacht zur Aufnahme des Bremsbelags aufweisen, wobei die Bremsbelagaufnahme an in Umfangsrichtung des Scheibenraums (bezogen auf die Laufrichtung des Laufrads bzw. der Bremsscheibe) gegenüberliegenden Seiten des Schachtes ausgebildet sein kann.

Erfindungsgemäß kann die Bremszange einen Schacht zur Aufnahme des Bremsbelags aufweisen, wobei die Bremsbelagaufnahme in Umfangsrichtung des Scheibenraums (bezogen auf die Laufrichtung des Laufrads bzw. der Bremsscheibe) mittig zu dem Schacht ausgebildet sein kann.

Erfindungsgemäß kann die Bremsbelagaufnahme Führungen aufweisen, die in entsprechende Aufnahmen der Bremsbeläge eingreifen und von diesen teilweise umschlossen werden können. Diese Ausbildung der Erfindung hat den Vorteil, dass die Bremsbeläge quasi wie Kleiderbügel auf die Stange oder Vorhänge in eine Vorhangschiene gehängt werden können, ohne dass ein Bolzen entfernt und durch eine geschlossene Aufnahme der Bremsbeläge geschoben werden muss, wie es im Stand der Technik bekannt ist.

Gemäß einer Ausführung der Erfindung wird ein Bremsbelag für eine hydraulische Bremse mit einer Bremszange angegeben, die einen Scheibenraum aufweist, wobei der Bremsbelag Fortsätze zum Umschließen einer Bremsbelagaufnahme der Bremszange aufweist, wobei die Fortsätze derart angeordnet und ausgebildet sind, dass der Bremsbelag aus einer Lage in der Mittelebene des Scheibenraums der Bremszange zur Seite auf die Bremsbelagaufnahme verschiebbar ist.

Erfindungsgemäß können die Fortsätze paarweise seitlich und oberhalb des Bereichs angeordnet sein, in dem der Reibbelag des Bremsbelags vorgesehen ist.

Erfindungsgemäß können die Fortsätze oberhalb des Bereichs angeordnet sein, in dem der Reibbelag vorgesehen ist, wobei die Fortsätze vorzugsweise ein Bügelpaar zum Einhängen des Reibbelags auf der Bremsbelagaufnahme bilden.

Die Erfindung wird im Folgenden anhand der in den Figuren gezeigten Ausführungsbeispiele näher beschrieben.
- Fig. 1: zeigt eine Explosionsdarstellung einer Bremsscheibenanordnung gemäß einer Ausführung der Erfindung mit einer Zentralschraube.
- Fig. 2: zeigt die Bremsscheibenanordnung von Figur 1 im zusammengesetzten Zustand, wobei die Radnabe der Übersicht halber weggelassen ist, in einer geschnittenen Seitendarstellung.
- Fig. 3: zeigt eine geschnittene Seitenansicht der Bremsscheibenanordnung von Figur 1 als Explosionszeichnung.
- Fig. 4: zeigt eine der Figur 3 entsprechende Ansicht einer Bremsscheibenanordnung gemäß einer weiteren Ausführung der Erfindung.
- Fig. 5: zeigt eine Schnittansicht einer Bremszange mit einer Bremsleitung einer hydraulischen Scheibenbremse gemäß der Erfindung.
- Fig. 6: zeigt eine Detailansicht der hydraulischen Scheibenbremse von Fig. 5, wobei nur das Verbindungsglied und das Anschlussglied mit der Bremsleitung dargestellt sind.
- Fig. 7: zeigt eine perspektivische teilweise freigeschnittene Teilansicht der Bremszange von Figur 5 mit weiteren Details des Verbindungsglieds von Figur 5.
- Fig. 8: zeigt eine Außenansicht der Bremszange und Bremsleitung von Figur 5.
- Fig. 9: zeigt eine Seitenansicht der Bremszange und Bremsleitung der hydraulischen Scheibenbremse von Figur 5.
- Fig. 10: zeigt eine der Figur 5 entsprechende Schnittansicht einer Scheibenbremse gemäß einer weiteren Ausführung der Erfindung.
- Fig. 11: zeigt eine Innenansicht eines Gehäuses einer Geberarmatur gemäß einer Ausführung der Erfindung ohne Deckel und ohne den Ausgleichsraum begrenzenden Balg von oben.
- Fig. 12: zeigt eine Ansicht des Gehäuses der Geberarmatur von Figur 11 in Richtung des Zylinders ohne Kolben und ohne die den Zylinderraum verschließenden Teile.
- Fig. 13: zeigt eine Ansicht der Geberarmatur von Figur 11, wobei ein Teil des Gehäuses in Richtung des Ausgleichsbehälters ohne Deckel und ohne den Ausgleichsraum begrenzenden Balg dargestellt ist.
- Fig. 14: zeigt eine perspektivische Ansicht des den Ausgleichsraum begrenzenden Balgs der Geberarmatur von Figur 11.
- Fig. 15: zeigt eine Seitenansicht des Balgs von Figur 14.
- Fig. 16: zeigt eine Ansicht des Balgs 14 von unten, das heißt aus der Richtung des Ausgleichsraums.
- Fig. 17: zeigt eine Seitenansicht des Balgs von Figur 14.
- Fig. 18: zeigt eine Schnittdarstellung einer Geberarmatur, einer hydraulischen Scheibenbremse gemäß der Erfindung.
- Fig. 19: zeigt eine Detailansicht im Bereich des Kreises XIX von Figur 18.
- Fig. 20: zeigt eine Schnittansicht einer Geberarmatur gemäß einer weiteren Ausführung der Erfindung für eine hydraulische Scheibenbremse.
- Fig. 21: zeigt eine Detailansicht im Bereich des Kreises XXI von Figur 20.
- Fig. 21A: zeigt eine Ansicht des Einstellglieds und des Druckstücks der Geberarmatur von Figur 20 aus der Richtung des Kolbens, wobei die übrigen Teile der Übersicht halber weggelassen sind.
- Fig. 22: zeigt eine Geberarmatur gemäß einer weiteren Ausführung der Erfindung einer hydraulischen Scheibenbremse.
- Fig. 23: zeigt eine Detailansicht im Bereich des Kreises XXIII von Figur 22.
- Fig. 24: zeigt eine perspektivische Ansicht der Geberarmatur von Figur 22.
- Fig. 25: zeigt eine Detailansicht im Bereich des Kreises XXV von Figur 24.
- Fig. 26: zeigt eine Seitenansicht der Geberarmatur von Figur 22.
- Fig. 27: zeigt eine Ansicht des Abstandsglieds der Geberarmatur von Figur 22 von unten.
- Fig. 28: zeigt eine Seitenansicht des Abstandsglieds von Figur 27.
- Fig. 29: zeigt eine Seitenansicht des Abstandsglieds von Figur 27.
- Fig. 30: zeigt eine perspektivische Darstellung der Bedienungseinrichtung der Druckpunkteinstellvorrichtung der Geberarmatur von Figur 22.
- Fig. 31: zeigt eine Seitenansicht der Betätigungseinrichtung von Figur 30.
- Fig. 32: zeigt eine perspektivische Ansicht der Bedienungseinrichtung von Figur 30 von unten.
- Fig. 33: zeigt eine Seitenansicht der Betätigungseinrichtung von Figur 30.
- Fig. 34: zeigt eine Schnittansicht einer Geberarmatur einer weiteren Ausführung der Erfindung mit einer Sensoreinrichtung zur Erfassung der Stellung des Kolbens entlang der Linie XXXIV-XXXIV von Fig. 41.
- Fig. 35: zeigt eine Schnittansicht einer Geberarmatur gemäß einer weiteren Ausführung der Erfindung.
- Fig. 36: zeigt eine Seitenansicht der Bremszange von Fig. 9 als Strichzeichnung.
- Fig. 37: zeigt eine perspektivische Schnittansicht der Bremszange von Figur 36, wobei der Schnitt durch den Scheibenraum verläuft.
- Fig. 38: zeigt eine Schnittansicht der Bremszange von Figur 36, wobei die Schnittebene in der Mitte des Scheibenraums liegt.
- Fig. 39: zeigt eine Seitenansicht der Bremszange von Figur 36 von der bezogen auf Figur 36 gegenüberliegenden Richtung.
- Fig. 40: zeigt eine der Figur 38 entsprechende Zeichnung, bei der Hilfslinien zur Veranschaulichung der Geometrie der die Bremszange versteifenden Komponenten.
- Fig. 41: zeigt eine Schnittansicht der Geberarmatur von Fig. 34 entlang der Linie XL1-XLI von Fig. 34.
- Fig. 42: zeigt eine perspektivische Ansicht der Geberarmatur von Fig. 34.
- Fig. 43: zeigt eine Seitenansicht eines Bremsbelags gemäß einer Ausführung der Erfindung.
- Fig. 44: zeigt eine Schnittansicht einer Bremszange in der Ebene der Bremsscheibe gemäß einer Ausführung der Erfindung mit einem Bremsbelag gemäß Fig. 43.
- Fig. 45: zeigt eine perspektivische Teilansicht der Bremszange von Fig. 44, die die Befestigung der Bremsbeläge von Fig. 43 an der Bremszange von Fig. 44 zeigt.
- Fig. 46: zeigt eine Aufsicht der Bremszange von Fig. 44 ohne Bremsbeläge in Richtung der Nabe (bei montierter Bremszange).
- Fig. 47: zeigt eine Aufsicht der Bremszange von Fig. 44 ohne Bremsbeläge in einer Richtung, die zu der von Fig. 46 entgegengesetzt ist.
- Fig. 48: zeigt eine Seitenansicht der Bremszange von Fig. 44 mit eingesetzten Bremsbelägen gemäß Fig. 43.
- Fig. 49: zeigt eine Ansicht der Bremszange von Fig. 44 ohne Bremsbeläge in einer Richtung von unten (bezogen auf Fig. 48).
- Fig. 50: zeigt eine Ansicht der Bremszange von Fig. 44 ohne Bremsbeläge in einer Richtung von oben (bezogen auf Fig. 48).
- Fig. 51: zeigt eine Seitenansicht eines Bremsbelags gemäß einer weiteren Ausführung der Erfindung.
- Fig. 52: zeigt eine Schnittansicht einer Bremszange in der Ebene der Bremsscheibe gemäß einer weiteren Ausführung der Erfindung mit einem Bremsbelag gemäß Fig. 51.
- Fig. 53: zeigt eine perspektivische Teilansicht der Bremszange von Fig. 52, die die Befestigung der Bremsbeläge von Fig. 51 an der Bremszange von Fig. 52 zeigt.
- Fig. 54: zeigt eine Aufsicht der Bremszange von Fig. 52 mit eingesetzten Bremsbelägen gemäß Fig. 51 in Richtung der Nabe (bei montierter Bremszange).
- Fig. 55: zeigt eine Aufsicht der Bremszange von Fig. 52 mit eingesetzten Bremsbelägen gemäß Fig. 51 in einer Richtung, die zu der von Fig. 54 entgegengesetzt ist.
- Fig. 56: zeigt eine Seitenansicht der Bremszange von Fig. 52 mit eingesetzten Bremsbelägen gemäß Fig. 51.
- Fig. 57: zeigt eine Ansicht der Bremszange von Fig. 44 mit eingesetzten Bremsbelägen gemäß Fig. 51 in einer Richtung von unten (bezogen auf Fig. 56).
- Fig. 58: zeigt eine Ansicht der Bremszange von Fig. 52 mit eingesetzten Bremsbelägen gemäß Fig. 51 in einer Richtung von oben (bezogen auf Fig. 56).

In der Beschreibung der Ausführungsbeispiele werden folgende Bezugszeichen verwendet:
- 1: Bremsscheibenanordnung
- 10: Adapter (Centerlockadapter bzw. Zentraladapter)
- 11: Innenverzahnung
- 12: Mitnehmer (Noppen)
- 13: Schulter
- 20: Bremsscheibe
- 21: Aussparung
- 22: Öffnung
- 23: Bremsband
- 24: Streben
- 25: Öffnung
- 26: Außenkontur
- 30: Verbindungsglied (Federring)
- 31: Verbindungselement (Haken)
- 32: Sicherungselement (Noppe)
- 33: Ring
- 34: Fortsatz
- 40: Schraube (Centerlockschraube)
- 41: Außengewinde
- 42: Stirnverzahnung
- 43: Werkzeugeingriff
- 44: Werkzeugeingriff
- 110: Bremszange
- 111: Hydraulikanschlussbohrung
- 112: Hydraulikkanal
- 113: Verbindungsabschnitt
- 114: Druckraum
- 115: Innengewindeabschnitt
- 116: Verschluss
- 117: Anschlussabschnitt
- 118: Bremszangenzylinder
- 119: Kolben
- 1191: Bremsbelag
- 120: Bremsleitung
- 130: Anschlussglied
- 131: ringförmiger Kopf
- 132: Verbindungskanal
- 133: Hülse
- 134: Dichtung (z.B. O-Ring)
- 135: Dichtung (z.B. O-Ring)
- 140: Verbindungsglied
- 141: Verbindungsbereich
- 142: Außenverzahnung
- 143: Verbindungsabschnitt
- 145: Außengewindeabschnitt
- 146: umlaufende Nut
- 147: Werkzeugeingriffabschnitt
- 151: Richtung der Achse des Bremszangenzylinders 118
- 152: Richtung der Hydraulikanschlussbohrung 111
- 153: Richtung senkrecht zu Richtung 151 der Achse des Bremszangenzylinders 118
- 154: Richtung des Anschlussglieds 130
- 181: Versteifungsglied (beispielsweise Bügel)
- 182: Versteifungsglied (beispielsweise Bügel ohne Hydraulikanschluss)
- 191: Richtung des Versteifungsglieds 181 in der Ebene des Scheibenraumes
- 192: Richtung des Versteifungsglieds 182 in der Ebene des Scheibenraumes
- 193: Mitte des den Kolben aufnehmenden Zylinderraums
- 200: Geberarmatur
- 210: Gebergehäuse
- 211: Ausgleichsraum
- 211A: Ausgleichsraumabschnitt
- 211B: Ausgleichsraumabschnitt
- 211C: Ausgleichsraumabschnitt
- 211D: Ausgleichsraumabschnitt
- 212A: Ausgleichsbohrung
- 212B: Ausgleichsbohrung
- 212C: Ausgleichsbohrung
- 212D: Ausgleichsbohrung
- 213: Steg
- 214: Rippe
- 215: Vertiefung
- 220: Zylinderraum (bzw. Kolbenraum, d.h. anstelle des Begriffs Zylinderraum kann auch der Begriff Kolbenraum verwendet werden. Der Zylinderraum bzw. Kolbenraum bezeichnet den Raum in dem Geberzylinder, in dem der Kolben verschiebbar angeordnet ist. Das gilt für die gesamte vorliegende Offenbarung, insbesondere auch für die anderen Ausführungsbeispiele, die allgemeine Beschreibung und die Ansprüche).
- 222A: Öffnung der Ausgleichsbohrung in den Zylinderraum
- 222B: Öffnung der Ausgleichsbohrung in den Zylinderraum
- 222C: Öffnung der Ausgleichsbohrung in den Zylinderraum
- 222D: Öffnung der Ausgleichsbohrung in den Zylinderraum
- 230: Balg
- 231A: Fortsatz
- 231B: Fortsatz
- 231C: Fortsatz
- 232D: Fortsatz
- 232: Rand
- 233: Fläche
- 234: Ausbuchtung
- 300: Geberarmatur
- 310: Hebel bzw. Bremshebel bzw. Kupplungshebel
- 311: Drehpunkt bzw. Bolzen
- 312: Bolzen
- 313: Feder
- 314: Mutter
- 320: Betätigungselement
- 321: Innenverzahnung
- 322: Verzahnung
- 323: Feder
- 330: Spindel
- 331: Kugelkopf
- 332: Bund
- 333: unterer Abschnitt
- 334: oberer Abschnitt
- 335: Verzahnung
- 340: Kolben
- 341: Aufnahme
- 342: Dichtung
- 343: Dichtung
- 344: Feder
- 350: Gehäuse der Geberarmatur
- 351: Gehäusedeckel
- 352: Gegenstück
- 353: Befüllöffnung
- 354: Kanal
- 360: Ausgleichsraum
- 361: Ausgleichsraumabschnitt
- 362: Ausgleichsraumabschnitt
- 363: Steg
- 364: Balg
- 380: Rasthülse
- 381: Verzahnung
- 382: Außengewinde
- 400: Geberarmatur
- 410: Hebel bzw. Bremshebel bzw. Kupplungshebel
- 411: Drehpunkt bzw. Bolzen
- 420: Einstellvorrichtung für die Griffweite
- 421: Drehknopf
- 422: Abstandshalter
- 423: Bund
- 424: Fortsatz
- 425: Flansch
- 430: Spindel
- 431: Kopf
- 432: Bund
- 433: Hülse
- 434: Stift
- 435: Werkzeugeingriffabschnitt
- 436: Leerweg
- 440: Kolben
- 441: Aufnahme
- 442: Dichtung
- 443: Dichtung
- 444: Feder
- 450: Gehäuse
- 451: Deckel
- 452: Gegenstück
- 453: Befüllöffnung
- 454: Kanal
- 460: Ausgleichsraum
- 461: Ausgleichsraumabschnitt
- 462: Ausgleichsraumabschnitt
- 463: Steg
- 464: Balg
- 470: Druckstück
- 471: Fortsatz
- 472: Fortsatz
- 500: Geberarmatur
- 510: Hebel bzw. Bremshebel bzw. Kupplungshebel
- 511: Bolzen bzw. Drehpunkt
- 520: Einstellvorrichtung Kolbenanschlag
- 521: Anschlagteil (mit Gehäuse, drehfest)
- 522: Einstellteil (gegenüber Anschlagteil 521, verdrehbar)
- 523: Fortsatz
- 524: Betätigungsglied
- 525: Gewinde
- 526: Gewinde
- 527: Vorsprung
- 529: Stift
- 530: Spindel
- 540: Kolben
- 541: Aufnahme
- 542: Dichtung
- 543: Dichtung
- 544: Feder
- 545: Bund
- 550: Gehäuse
- 551: Deckel
- 552: Gegenstück
- 553: Befüllöffnung
- 555: Aufnahme
- 556: Rastierung
- 557: Bund
- 600: Geberarmatur
- 610: Hebel bzw. Bremshebel bzw. Kupplungshebel
- 611: Bolzen bzw. Drehpunkt
- 612: Bolzen
- 613: Feder
- 620: Einstellvorrichtung
- 621: Abstandsglied
- 622: Betätigungsglied
- 623: Hülse
- 629: Stift
- 630: Spindel
- 631: Kopf
- 639: Anschlag (beispielsweise Bund)
- 640: Kolben
- 641: Aufnahme
- 642: Dichtung
- 643: Dichtung
- 644: Feder
- 649: Abflachung bzw. Fläche
- 650: Gehäuse
- 651: Deckel
- 652: Gegenstück (beispielsweise Schelle)
- 653: Anschlag (für Bund (693) der Verbindungseinrichtung 690)
- 660: Ausgleichsraum
- 661: Ausgleichsraumsabschnitt
- 662: Ausgleichsraumsabschnitt
- 664: Balg
- 670: Druckstück
- 680: Sensoreinrichtung
- 681: Magnet (beispielsweise Stabmagnet)
- 682: Sensor (beispielsweise Reedkontakt bzw. Hallsensor)
- 688: Lenkerrohr
- 689: Bremsleitung
- 690: Verbindungseinrichtung
- 691: Stehbolzen
- 692: Gewindeabschnitt (zur Befestigung des Stehbolzens im Gehäuse 650)
- 693: Bund
- 694: Gewindeabschnitt (zur Befestigung von Verbindungsmitteln zur Befestigung des Gegenstücks 652 an dem Deckel 651 bzw. mit dem Gehäuse 650 an dem Lenkerrohr 688)
- 695: Spezialwerkzeugeingriff
- 696: Befestigungsmutter
- 700: Geberarmatur
- 710: Hebel bzw. Bremshebel bzw. Kupplungshebel
- 711: Bolzen bzw. Drehpunkt
- 712: Bolzen
- 720: Einstellvorrichtung
- 721: Werkzeugeingriffabschnitt
- 729: Stift
- 730: Spindel
- 731: Kopf
- 740: Kolben
- 741: Aufnahme
- 742: Dichtung
- 743: Dichtung
- 744: Feder
- 750: Gehäuse
- 751: Deckel
- 752: Gegenstück
- 760: Ausgleichsraum
- 764: Balg
- 780: Sensoreinrichtung
- 781: Magnet
- 810: Bremszange
- 811: Bremszylinder
- 812: Bremsbelaganlagefläche
- 813: Bremsbelagaufnahme (Schiene)
- 814: Versteifungsglied
- 815: Versteifungsglied
- 816: Hydraulikkanal
- 817: Anschlussabschnitt
- 820: Bremsbelag
- 821: Fortsatz
- 822: Fortsatz
- 823: Aussparung
- 824: Anlagefläche
- 825: Aussparung
- 826: Reibbelag
- 910: Bremszange
- 911: Bremszylinder
- 912: Bremsbelaganlagefläche
- 913: Bremsbelagaufnahme (Schiene)
- 9131: Verbindungssteg
- 914: Versteifungsglied
- 915: Versteifungsglied
- 916: Hydraulikkanal
- 917: Anschlussabschnitt
- 920: Bremsbelag
- 921: Fortsatz
- 922: Fortsatz
- 923: Aussparung
- 924: Anlagefläche
- 926: Reibbelag
- 930: Federeinrichtung

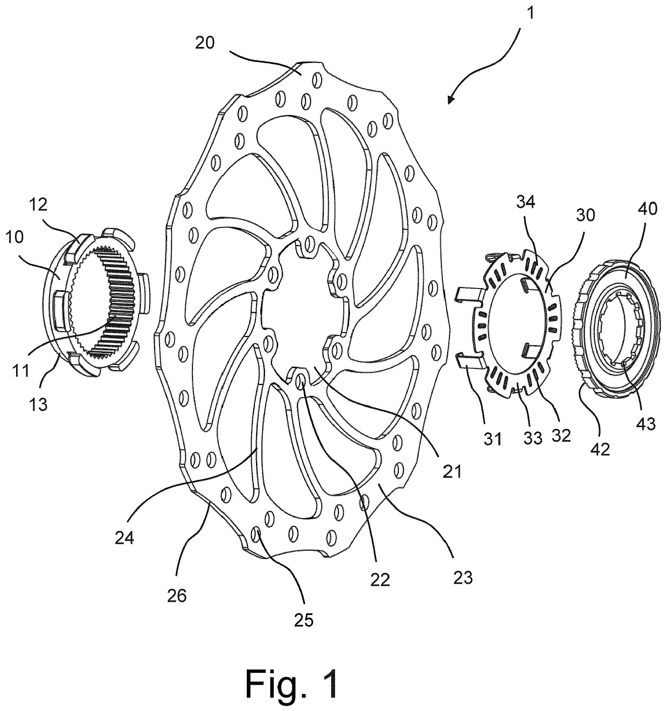

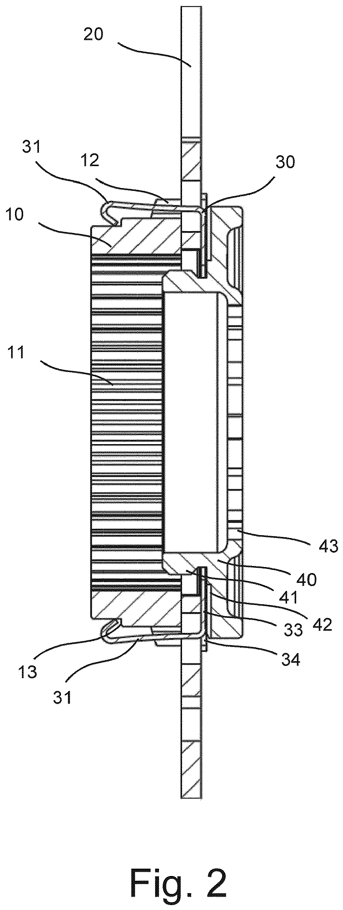

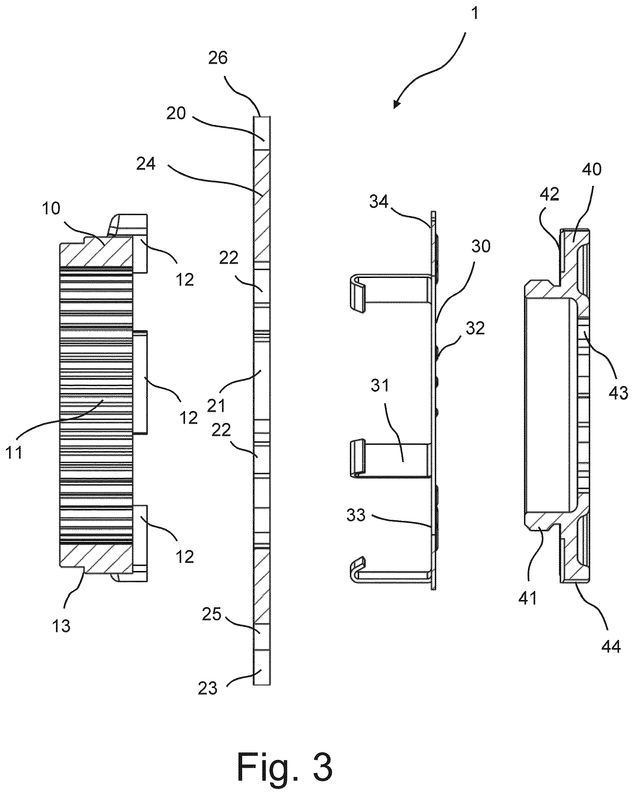

Die Figuren 1 bis 3 zeigen eine Bremsscheibenanordnung gemäß einer Ausführung der Erfindung.

Die Bremsscheibenanordnung 1 weist einen Adapter 10, eine Bremsscheibe 20 und ein Verbindungsglied 30 auf. Der Adapter 10 weist eine Innenverzahnung 11 auf, die auf einer entsprechenden Außenverzahnung einer Radnabe zur verdrehsicheren Verbindung zwischen Adapter 10 und Radnabe anordbar ist. Derartige Radnaben sind dem Fachmann bekannt und sind in den Figuren nicht dargestellt.

Der Adapter 10 weist Mitnehmer 12 auf, die in axialer Richtung vorstehen. Die Bremsscheibe 20 weist Aussparungen 21 auf, die derart ausgebildet sind, dass die Mitnehmer 12 des Adapters 10 darin aufgenommen werden können, um eine verdrehsichere Verbindung zwischen dem Adapter 10 und der Bremsscheibe 20 herzustellen.

Die Mitnehmer 12 stehen in axialer Richtung vorzugsweise eine Länge vor, die der Dicke der Bremsscheibe 20 entspricht. Die Bremsscheibe 20 liegt dann mit den Bereichen, in denen die Öffnungen 22 vorgesehen sind, auf dem Adapter 10 zwischen den Mitnehmern 12 auf und bildet mit den Mitnehmern 12 des Adapters 10 eine plane Auflagefläche für das Verbindungsglied 30.

Die Bremsscheibe 20 weist ein Bremsband 23 auf, das mit mehreren Streben 24 mit einem inneren Ring verbunden ist, in dem sechs Öffnungen 22 angeordnet sind, die zur Aufnahme von Befestigungsschrauben dienen, wenn die Bremsscheibe 20 an einer Radnabe ohne zentralen Adapter (Centerlockadapter) befestigt werden soll. Zwischen den Bereichen mit den Öffnungen 22 sind die sechs Aussparungen 21 angeordnet. In dem Bremsband 23 sind Öffnungen 25 vorgesehen. Die Wirkung der Öffnungen 25 in dem Bremsband 23 sind dem Fachmann bekannt.

Des Weiteren weist das Bremsband 23 eine Außenkontur 26 auf, die nicht kreisförmig ist. Die Wirkung der nicht kreisförmigen Außenkontur des Bremsbandes ist dem Fachmann bekannt.

Das Verbindungsglied 30 weist einen Ring 33 auf, der im Wesentlichen parallel zu der Ebene der Bremsscheibe 20 verläuft. Von dem Ring erstrecken sich sechs Verbindungselemente 31 in einer im Wesentlichen axialen Richtung. Die Verbindungselemente 31 sind aus einem elastischen Material ausgebildet und weisen an ihrem Ende einen Haken auf. Die Verbindungselemente 31 sind entsprechend den Öffnungen 22 der Bremsscheibe 20 am Umfang des Rings verteilt und sind derart angeordnet, dass sie durch die Öffnungen 22 geführt werden können. Der Adapter 10 weist eine Schulter 13 auf. Die Verbindungselemente 31 sind derart ausgebildet und angeordnet, dass das Verbindungsglied 30 mit den Verbindungselementen 31 durch die Öffnungen 22 in der Bremsscheibe 20 gesteckt werden kann und die Verbindungselemente hinter die Schulter 31 des Adapters einrasten können, wenn der Adapter 10 mit seinen Mitnehmern 12 in den Aussparungen 21 der Bremsscheibe 20 angeordnet ist. Durch eine derartige Anordnung ergibt sich eine erfindungsgemäße Bremsscheibenanordnung 1, bei der die Bremsscheibe 20 verliersicher an dem Adapter 10 angeordnet ist. Das Verbindungsglied 30 schafft eine lose Verbindung, die hinreichend ist, die Bremsscheibe 20 mit dem Adapter 10 zu verbinden. Eine feste Verbindung zwischen Adapter 10 und Bremsscheibe 20 wird bei der Montage der Bremsscheibenanordnung 1 an der nicht dargestellten Radnabe erreicht, wenn die Zentralschraube 40 mit der Radnabe verbunden wird. Bei einem Bremsscheibenwechsel können das oder die Verbindungselemente 31 leicht wieder von dem Adapter 10 gelöst werden, indem die hakenartig ausgebildeten Verbindungselemente 31 leicht aufgedrückt werden, so dass sie sich von der Schulter des Adapters 10 lösen, die sie hintergreifen. Das Verbindungsglied 30 kann dann abgezogen werden, so dass die Verbindung zwischen Adapter 10 und Bremsscheibe 20 gelöst wird.

Das Verbindungsglied 30 weist an dem Ring 33 sechs Fortsätze 34 auf, die sich von dem Ring 33 radial nach außen erstrecken, und zwar in den Bereichen entsprechend den Aussparungen 21 in der Bremsscheibe 20. In diesen Bereichen, in denen der Ring 33 Fortsätze 34 aufweist, sind Sicherungselemente 32 vorgesehen, um ein ungewolltes Lösen der Zentralschraube 40 zu vermeiden. Die Zentralschraube 40 weist ein Außengewinde 41 auf, das mit einem nicht dargestellten Innengewinde der Radnabe zusammenwirkt, um die Bremsscheibenanordnung 1 an der Radnabe zu befestigen. Die Zentralschraube 40 weist ferner eine Stirnverzahnung 42 auf, die bei der Befestigung der Bremsscheibenanordnung mit der Zentralschraube 40 an der Radnabe derart an den Sicherungselementen 32 angeordnet wird, dass die Sicherungselemente 32 in die Stirnverzahnung 42 eingreifen und eine Verdrehung der angezogenen Zentralschraube 40 hinreichend sicher verhindern.

Die Zentralschraube 40 weist an ihrer Innenkontur einen Werkzeugeingriff 43 und an ihrer Außenkontur einen Werkzeugeingriff 44 auf. Das Werkzeug zum Anziehen und Lösen der Zentralschraube 40 kann an dem Werkzeugeingriff 43 und/oder an dem Werkzeugeingriff 44 angreifen. Entsprechend ist es dem Fachmann klar, dass die Zentralschraube auch nur den Werkzeugeingriff 43 an der Innenkontur oder den Werkzeugeingriff 44 an der Außenkontur aufweisen kann.

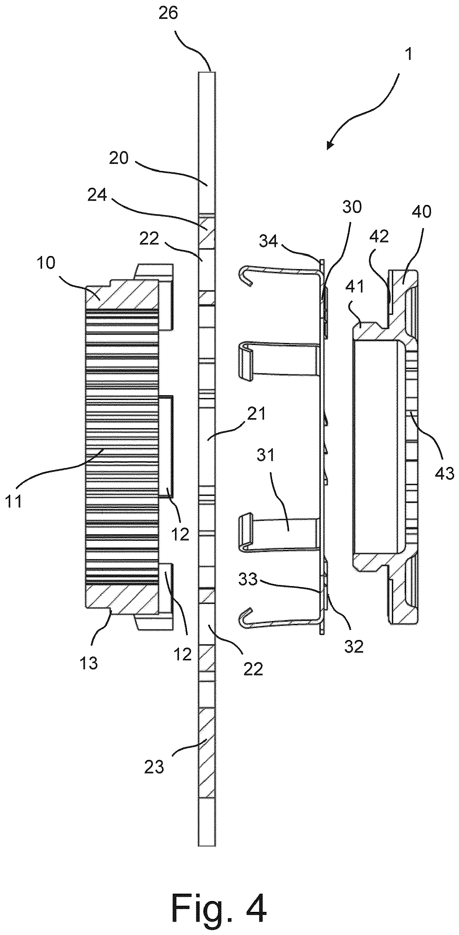

Figur 4 zeigt eine alternative Ausführung einer Bremsscheibenanordnung gemäß der Erfindung. Die gleichen Bauteile werden mit den gleichen Bezugszeichen beschrieben. Im Folgenden wird auf die Beschreibung der Ausführung gemäß den Figuren 1 bis 3 verwiesen und es werden nur die Unterschiede zwischen der Ausführung von Figur 4 und den Ausführungen gemäß den Figuren 1 bis 3 beschrieben.

Bei der Bremsscheibenanordnung 1 gemäß Figur 4 weist das Verbindungsglied 30 an seinem Ring 33 Sicherungselemente 32 auf, die eine hakenförmige Kontur aufweisen. Durch diese Kontur ergibt sich bei dem Anziehen der Zentralschraube ein Klinkeneffekt, das heißt, dass die zum Anziehen der Zentralschrauben 40 notwendige Kraft geringer als die zum Lösen erforderliche Kraft ist, weil sich eine Art Widerhakeneffekt beim Lösen der Zentralschrauben 40 ergibt. Die in Figur 4 dargestellte Zentralschraube weist keinen Werkzeugeingriff 44 an der Außenkontur der Zentralschrauben 40 auf.

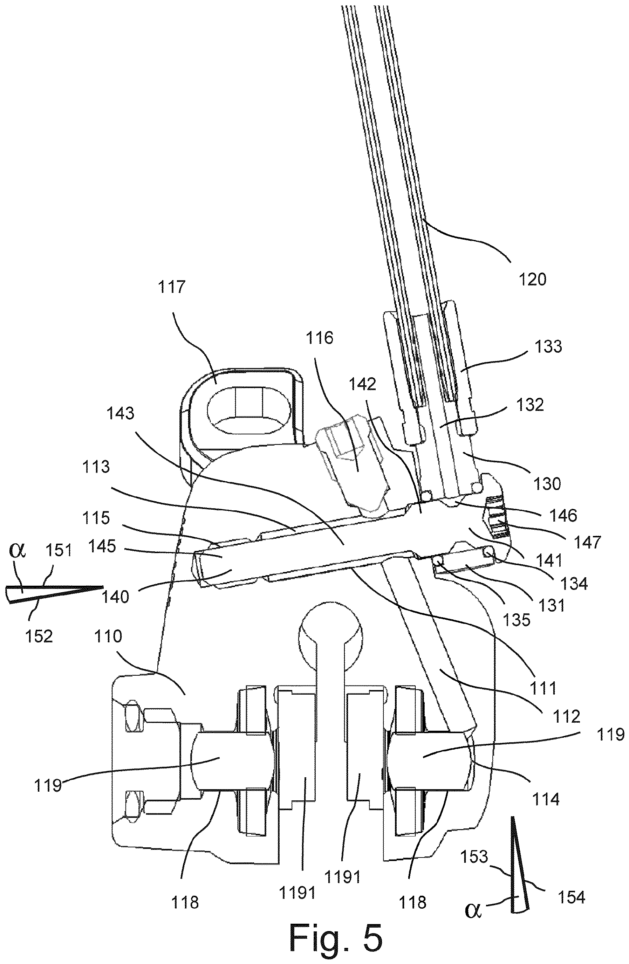

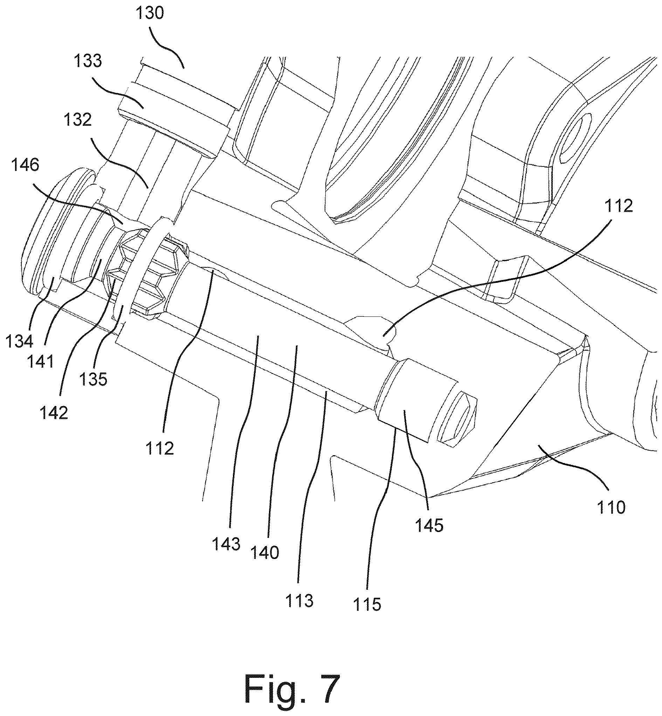

Die Figuren 5 bis 9 zeigen eine Bremszange einer hydraulischen Scheibenbremse gemäß der vorliegenden Erfindung.

Die hydraulische Scheibenbremse weist eine Bremszange 110 auf, in der eine Hydraulikanschlussbohrung 111 vorgesehen ist. Die Hydraulikanschlussbohrung 111 verläuft in einem Winkel von ungefähr 10° Neigung gegenüber der Achse der Zylinderbohrungen der Bremszangenzylinder. Die Achse der Zylinderbohrungen entspricht im Wesentlichen der Radachse. In den Zylinderbohrungen sind Kolben 119 angeordnet, die Bremsbeläge 1191 gegen eine nicht dargestellte Bremsscheibe zur Verzögerung des nicht dargestellten Rads in Angriff bringen.

Von der Hydraulikanschlussbohrung 111 verläuft ein Hydraulikkanal 112 zu einem Druckraum 114. Bei der dargestellten Ausführung weist die Bremszange zwei Druckräume 114 auf, die jeweils mit einem Hydraulikkanal 112 verbunden sind, der mit dem Verbindungsabschnitt 113 der Hydraulikanschlussbohrung 111 verbunden ist. In der in Fig. 5 gezeigten Schnittebene ist nur ein Hydraulikkanal 112 eingezeichnet. Der andere Hydraulikkanal 112 kann in einer anderen Schnittebene verlaufen bzw. ist der Übersicht halber nicht dargestellt. Die Hydraulikanschlussbohrung 111 weist an ihrem Ende einen Gewindeabschnitt 115 auf, in die das Verbindungsglied 140 mit einem Außengewindeabschnitt 145 eingeschraubt ist.

In eine nicht näher bezeichnete Befüllöffnung ist ein Verschluss 116 angeordnet. Die Bremszange 110 kann mit ihren Anschlussabschnitten 117 auf eine dem Fachmann bekannte Weise an einem feststehenden Rahmenteil des Zweirads bzw. Fahrrads oder Motorrads befestigt werden.

Die hydraulische Scheibenbremse weist eine Bremsleitung 120 auf, an der ein Anschlussglied 130 angeordnet ist. Das Anschlussglied 130 weist einen ringförmigen Kopf 131 auf. Das Anschlussglied weist einen innen liegenden Verbindungskanal 132 auf. Die Leitung 120 ist mit einer Hülse 133 auf das Anschlussglied 133 auf dem Fachmann bekannte Weise gepresst. In dem ringförmigen Kopf 131 sind Dichtungen 134 und 135 vorgesehen, die bei der dargestellten Ausführung O-Ring-Dichtungen sind.

In dem ringförmigen Kopf 131 des Anschlussglieds 130 ist ein Verbindungsglied 40 angeordnet. Das Verbindungsglied 140 weist einen Verbindungsbereich 141 auf, in den der Verbindungskanal 132 mündet. In den Verbindungsbereich 141 weist das Verbindungsglied 140 eine umlaufenden Nut 146 auf. Der Verbindungsbereich 141 ist mit den Dichtungen 132 und 133 gegenüber dem Anschlussglied 130 abgedichtet. Das Verbindungsglied 140 weist einen Verbindungsabschnitt 143 auf, der einen kleineren Außendurchmesser als der Verbindungsabschnitt 113 der Hydraulikanschlussbohrung 111 aufweist. Das Verbindungsglied 140 weist ferner einen Gewindeabschnitt 145 mit einem Außengewinde auf, der in den Gewindeabschnitt 115 der Anschlussbohrung 111 eingedreht ist. Zur hydraulischen Verbindung des Verbindungsbereichs 141 mit dem Verbindungsabschnitt 113 der Anschlussbohrung 110 weist das Verbindungsglied eine Außenverzahnung 142 auf. Um eine hydraulische Abdichtung zu erreichen, dichtet die Dichtung 135 zwischen dem Anschlussglied 130 und dem Bremszangengehäuse in axialer Richtung des Verbindungsglieds 140 ab. In Folge dieser Abdichtung ist es nicht notwendig, dass eine Dichtung zwischen dem Anschlussglied 130 und dem Verbindungsglied 140 erfolgt. Das ist wegen der Außenverzahnung 142 in diesem Abschnitt auch nicht möglich. Die Dichtung 132 kann derart ausgebildet sein, dass eine Abdichtung in radialer Richtung und/oder axialer Richtung des Verbindungsglieds 140 erfolgt. Um eine gute Abdichtung zu erreichen, ist eine Abdichtung in axialer Richtung des Verbindungsglieds 140 wünschenswert.

Das Verbindungsglied 140 weist ferner einen Werkzeugeingriffabschnitt 147 auf, der auf bekannte Weise ausgebildet ist.

Die erfindungsgemäße Ausführung hat den Vorteil, dass das Verbindungsglied 140 keinen innen laufenden Kanal wie eine Hohlschraube aufweist. Daher kann das Verbindungsglied kleiner ausgeführt werden bzw. eine höhere Stabilität aufweisen.

Gemäß einer alternativen Ausführung kann das Verbindungsglied 140 zumindest eine Nut aufweisen, die den Verbindungsbereich 141 mit dem Verbindungsabschnitt 113 hydraulisch verbindet. Diese Nut kann zusätzlich oder alternativ zu der Außenverzahnung 142 vorgesehen sein.

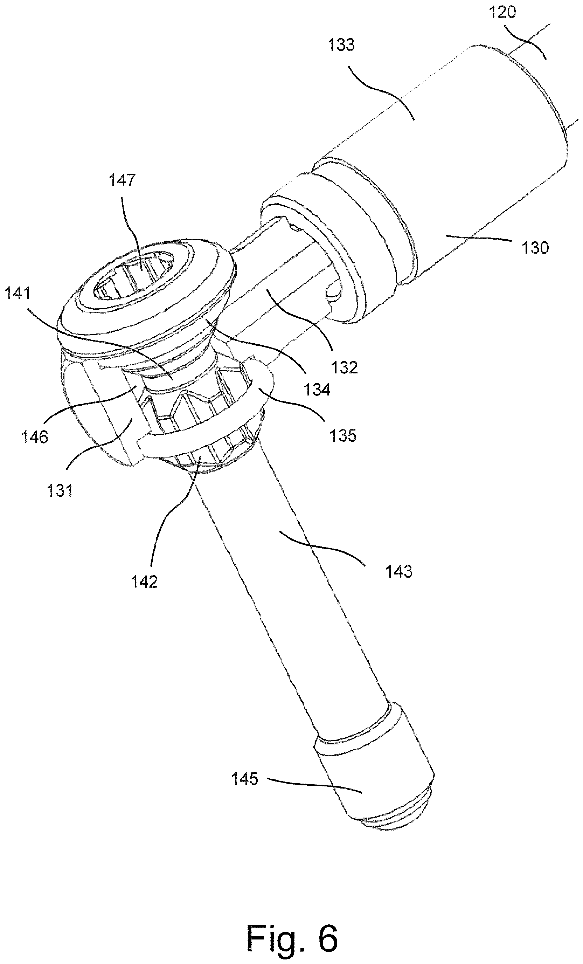

Figur 6 zeigt eine Detailansicht, bei der nur das Anschlussglied 130 und das Verbindungsglied 140 dargestellt ist. Figur 6 zeigt die hydraulische Verbindung zwischen dem Anschlussglied 130 und dem Verbindungsglied 140 und die zugehörige Abdichtung. Die Hydraulikleitung ist schematisch am oberen Rand dargestellt. Die Hydraulikleitung 120 ist über den Hydraulikkanal 132 mit dem Verbindungsbereich 141 hydraulisch verbunden, der über die Außenverzahnung 142 mit dem Verbindungsabschnitt 143 verbunden ist. Die Abdichtung erfolgt über die Dichtung 133 und 134, die sowohl in radialer als auch axialer Richtung des Verbindungsglieds 140 abdichten.

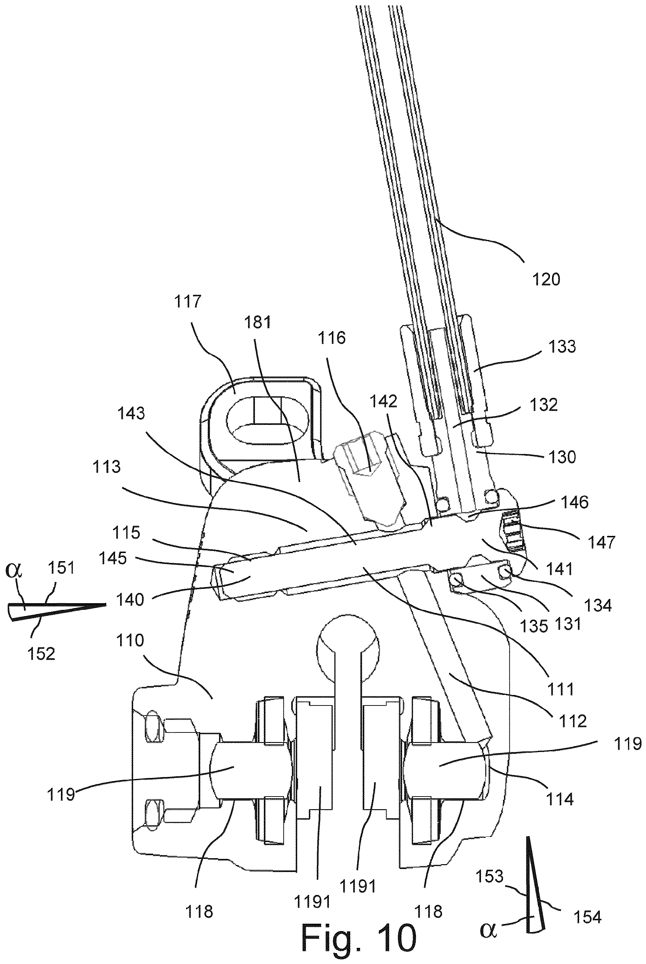

Figur 10 zeigt eine alternative Ausführung einer Scheibenbremse gemäß der Erfindung. Die gleichen Bauteile werden mit den gleichen Bezugszeichen wie bei dem in den Figuren 5 bis 9 gezeigten Ausführungsbeispiel beschrieben. Im Folgenden wird auf die Beschreibung der Ausführung gemäß den Figuren 5 bis 9 verwiesen und es werden nur die Unterschiede zwischen der Ausführung von Figur 10 und der Ausführung gemäß den Figuren 5 bis 9 beschrieben.

Die Ausführung gemäß Figur 10 unterscheidet sich von den Ausführungen in den Figuren 5 bis 9 dadurch, dass in dem ringförmigen Kopf 131 des Anschlussglieds 130 Nuten vorgesehen sind, in denen die Dichtungen 134 bzw. 135 angeordnet sind. Wegen der Anordnung der Dichtungen 134 und 135 in jeweils einer Nut ergibt sich nur eine Abdichtung in axialer Richtung des Verbindungsglieds 140, d.h. dass die Dichtung 134 zwischen dem ringförmigen Kopf 131 des Anschlussglieds 130 und dem Kopf des Verbindungsglieds 140 abdichtet, und dass die Dichtung 135 zwischen dem ringförmigen Kopf 131 des Anschlussglieds 130 und dem Gehäuse der Bremszange 110 abdichtet.

Die Hydraulikanschlussbohrung 111 verläuft in der Bremszange entlang einer Richtung 152, die gegenüber der Richtung 151 der Achse des Bremszangenzylinders 118 einen Winkel α aufweist. Das Verbindungsglied 140 ist in der Hydraulikanschlussbohrung 111 angeordnet und ebenfalls um den Winkel α gegenüber der Richtung 151 der Achse des Bremszangenzylinders 118 geneigt. In dem Verbindungsbereich 141 weist das Verbindungsglied 140 eine vorzugsweise umlaufende Nut bzw. Vertiefung auf, die mit dem Hydraulikkanal 132 in dem Anschlussglied 130 in hydraulischer Verbindung steht. Bei der dargestellten Ausführung der Erfindung weist das Verbindungsglied 140 eine Außenverzahnung 142 auf, die zwischen dem Verbindungsbereich 141 und dem Hydraulikübertragungsbereich 143 angeordnet ist. Alternativ und/oder zusätzlich kann das Verbindungsglied 140 eine Abflachung aufweisen, die in dem Bereich vorgesehen ist, in dem bei dem in den Figuren 5 bis 9 gezeigten Ausführungsbeispiel die Außenverzahnung vorgesehen ist.

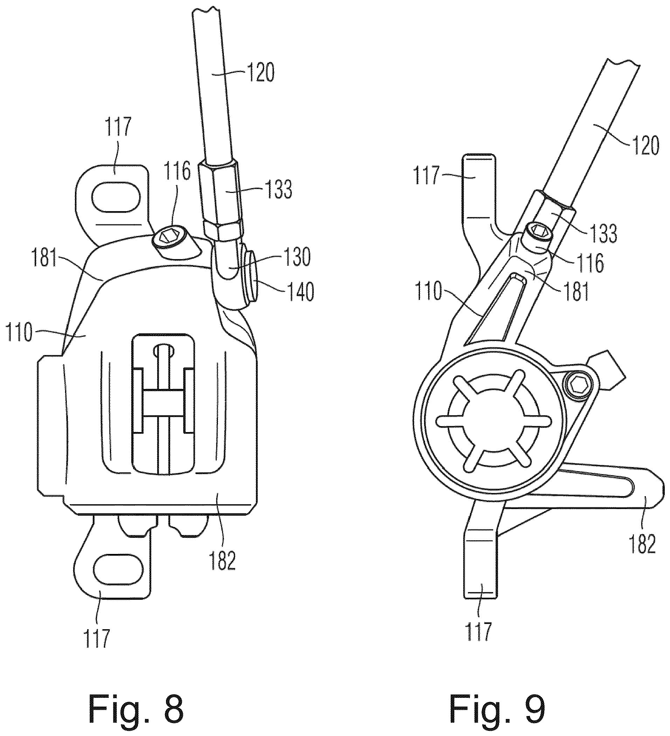

Das Anschlussglied 130 ist gerade ausgebildet, das heißt, dass der ringförmige Kopf 131 ohne Winkel in den Bereich übergeht, an dem die Leitung 120 mit der Hülse 133 befestigt ist. Das Anschlussglied 130 ist mit einem ringförmigen Kopf 131 an dem Verbindungsbereich 141 des Verbindungsglieds angeordnet, und zwar um die Achse des Verbindungsglieds 140 drehbar, die entlang der Richtung 152 verläuft. In Folge der schrägen Anordnung der Hydraulikanschlussbohrung 111 ist das Anschlussglied 130 ebenfalls um den Winkel α geneigt, der in den Figuren 5 und 9 als Winkel zwischen der Richtung 154, in der sich das Anschussglied 130 erstreckt, und der Richtung 153, die senkrecht zu der Richtung 151 der Achse des Bremszangenzylinders 118 verläuft, eingezeichnet ist.

Der Winkel α beträgt bei den in den Figuren gezeigten Ausführungen ungefähr 10°. Erfindungsgemäß kann der Winkel α auch einen größeren oder kleineren Wert aufweisen, d.h. beispielsweise in einem Bereich von 5 bis 20° und gegebenenfalls auch in einem Bereich von 5 bis 30° liegen.

In Folge der schrägen Anordnung der Hydraulikanschlussbohrung 111 in der Bremszange kann der Winkel, in dem die Bremsleitung 120 von der Bremszange weggeführt wird, leicht durch Drehung des Anschlussglieds 130 um das Verbindungsglied 140 geändert werden. Der maximale Winkel, in dem die Bremsleitung deutlich nach Außen geführt wird, ergibt sich, wenn die Bremsleitung genau nach oben gedreht wird. Je weiter die Bremsleitung in die Waagerechte gedreht wird, desto geringer wird der Winkel, in dem die Bremsleitung seitlich nach Außen geführt wird. Wird die Bremsleitung parallel zum Boden geführt, wird die Bremsleitung gar nicht nach Außen geführt, sondern verläuft entlang der Achse des Zweirads. Durch die schräge Anordnung der Hydraulikanschlussbohrung ergibt sich auch ein einfacher und sicherer Aufbau des Anschussglieds, das gerade ausgebildet werden kann, weil der Winkel zur Wegführung der Bremsleitung 120 durch die schräge Anordnung der Hydraulikanschlussbohrung geschaffen wird.

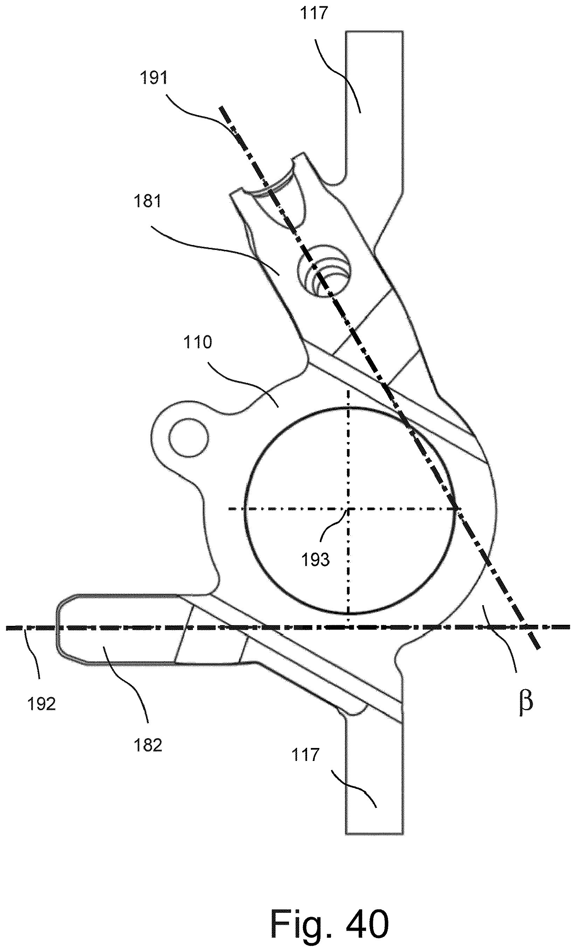

Figur 40 zeigt eine bevorzugte Geometrie einer erfindungsgemäßen Bremszange 110. Die Bremszange 110 weist zwei Seitenwände auf, in denen Bohrungen zur Aufnahme eines Kolbens ausgebildet sind. Die Mittellinie der Kolbenbohrungen ist mit dem Bezugszeichen 123 gekennzeichnet. Hilfslinien sind eingezeichnet, um den Mittelpunkt zu markieren. Die Bremszange 110 wird mit zwei Flanschen 117 an ein nicht dargestelltes feststehendes Rahmenteil eines Zweirad-Fahrzeuges befestigt. Die beiden Seitenwände der Bremszange sind über Bügel 181 und 182 mit einander verbunden. Zwischen den Bügeln 181 und 182 ist eine Bremsbelagaufnahme vorgesehen. Die Versteifungsbereiche bzw. Bügel 181 und 182 stehen in einem Winkel β zu einander, der bei der dargestellten Ausführung ungefähr 60° beträgt. Ein Winkel in diesem Bereich ist bevorzugt, jedoch sind andere Winkel denkbar. Die Größe des Winkels hängt auch von dem Abstand der Ebenen ab, in denen die Bügel 181, 182 liegen. Die Ebenen, in denen die Bügel liegen sind mit dem Bezugszeichen 191 bzw. 192 bezeichnet. Je geringer der Abstand der Ebenen 191, 192 von der Mittellinie 193 ist, desto größer sollte der Winkel β sein. Gemäß der bevorzugten Ausführung der Erfindung beträgt der Abstand der Ebenen 191 und 192 von der Mittellinie 193 ungefähr dem Radius der Zylinderbohrung.

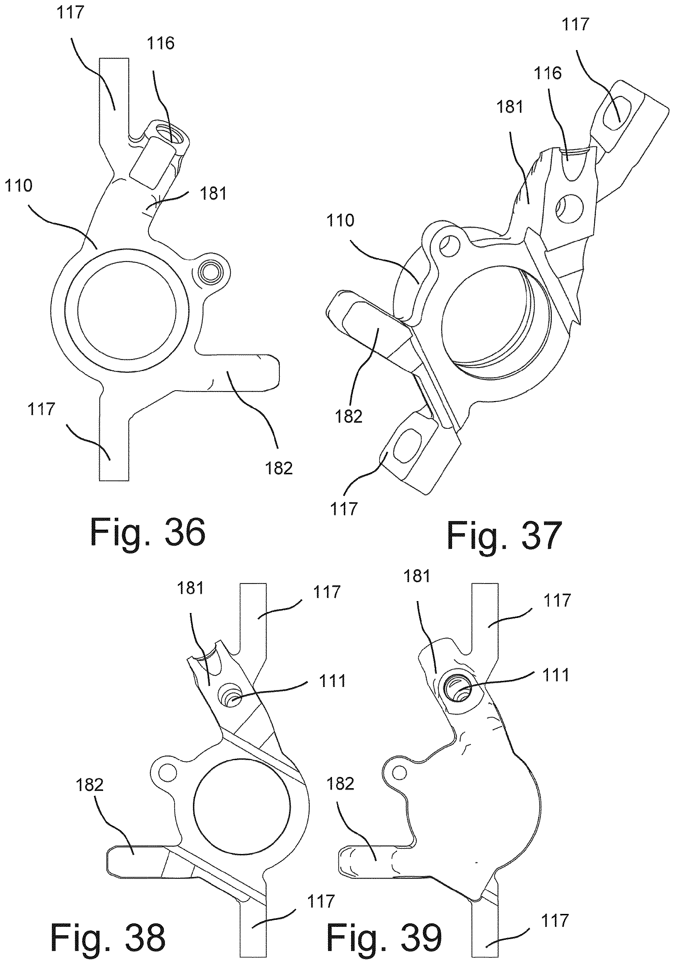

In dem Bügel 191 ist auch, wie in Figur 38 zu sehen, die Hydraulikanschlussbohrung 111 vorgesehen. Wenn die Hydraulikanschlussbohrung nicht in dem Bügel 181 vorgesehen ist, kann der Bügel 181 mit einer geringeren Stärke ausgeführt werden. Beispielsweise kann der Bügel 181 dann mit der gleichen Stärke wie der Bügel 182 ausgebildet sein. Bei dieser Ausführung ist es dann bevorzugt, dass der Bügel 181 ebenso wie der Bügel 182 einen größeren Abstand von der Mittellinie 193 aufweist, das heißt in anderen Worten, dass das Material an der inneren Seite des Bügels 181 weggenommen wird.

Gemäß der Erfindung weist der Bügel 181 eine größere Höhe auf als seine Stärke. Bei der dargestellten Ausführung beträgt die Höhe des Bügels 181 ungefähr das Doppelte von der Stärke des Bügels 181. Dieses Verhältnis ist bei dem Bügel 182 noch größer.

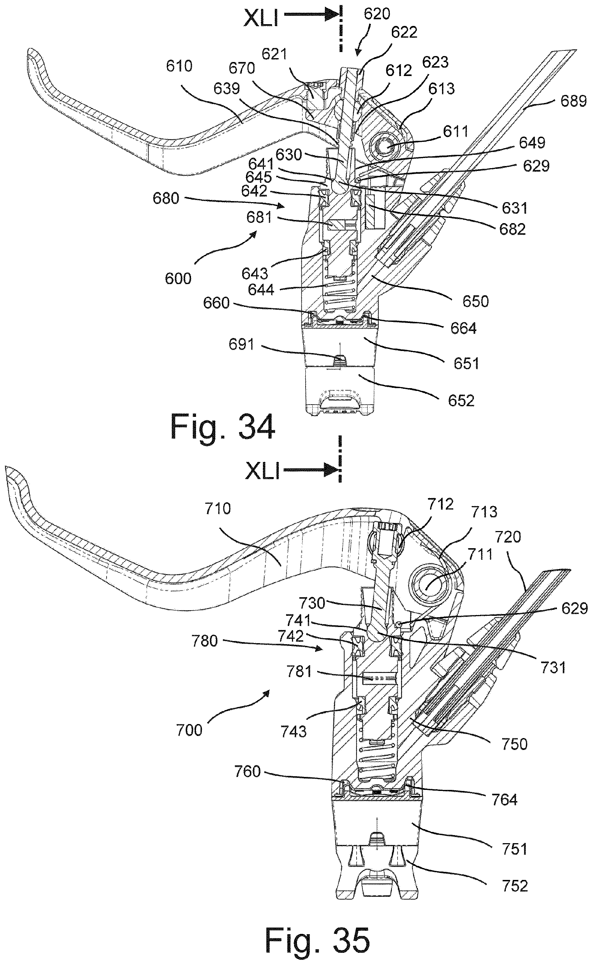

Wegen weiterer Details wird auf die Figuren 35 bis 38 sowie die Ausführungen zu dem Ausführungsbeispiel gemäß den Figuren 5 bis 9 bzw. 10 verwiesen.

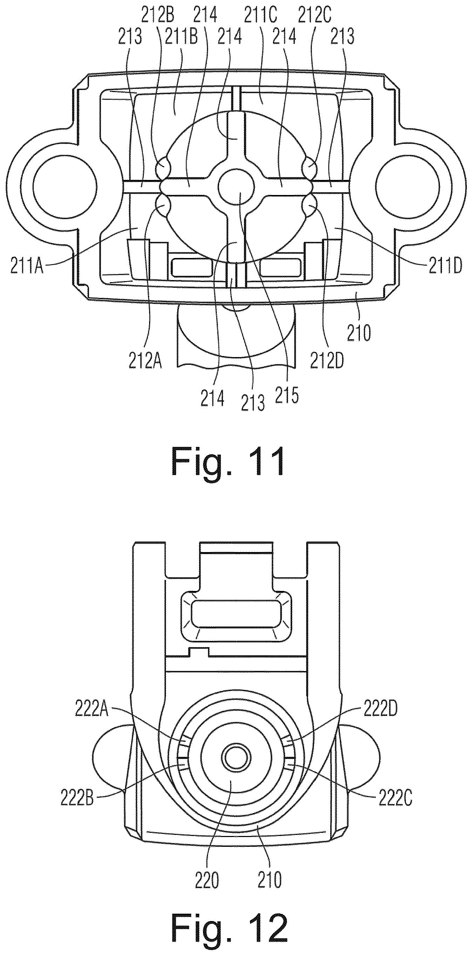

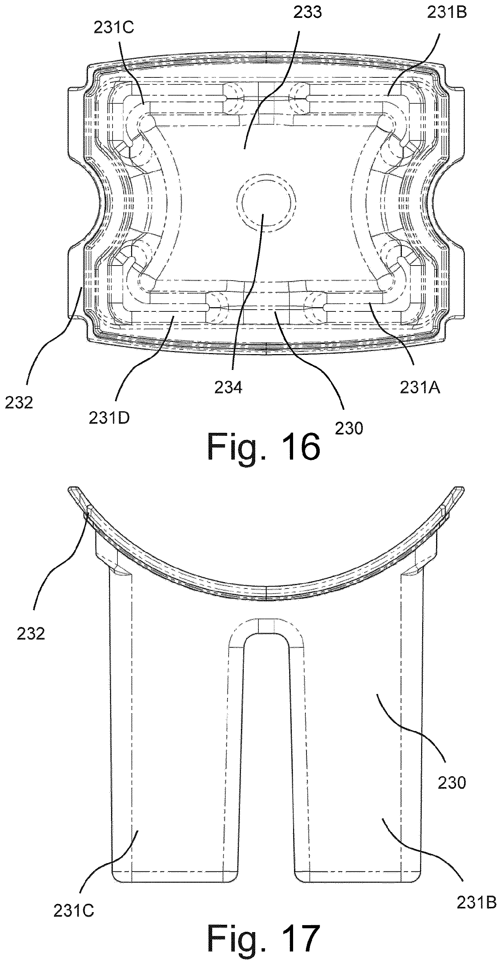

Die Figuren 11 bis 17 zeigen Details einer Geberarmatur gemäß der Erfindung, wobei der Schwerpunkt auf die Ausgestaltung des Ausgleichsraums 211A, 211B, 211C, 211D und den Balg 230 gelegt wird.

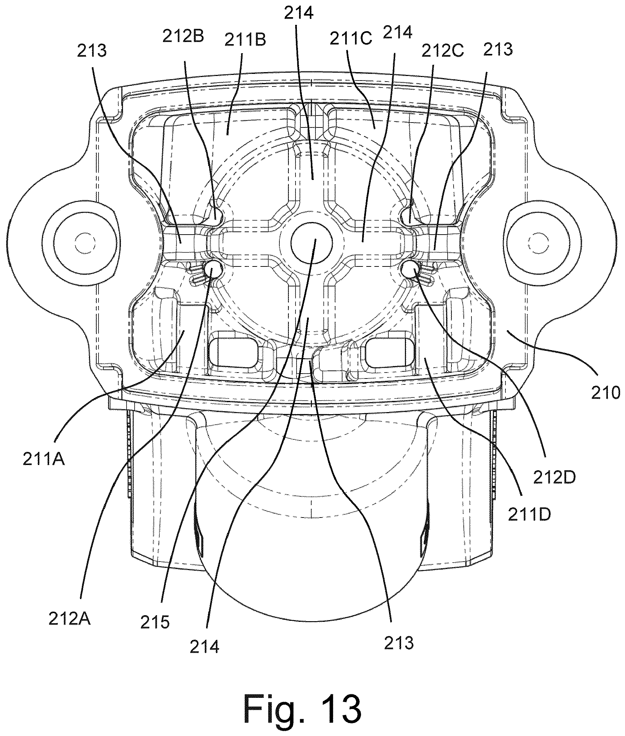

Der Ausgleichsraum ist in vier Abschnitte 211A, 211B, 211C und 211D unterteilt, die in dem Gehäuse 210 der Geberarmatur um den Zylinderraum 220 herum angeordnet sind. Mittig in dem Gehäuse der Geberarmatur ist der Zylinderraum 220 angeordnet, in dem ein nicht dargestellter Kolben verschiebbar angeordnet ist. Der Zylinderraum 220 weist an der Zylinderwand vier Öffnungen 222A, 222B, 222C, 222D auf, die über Ausgleichsbohrungen 212A, 212B, 212C, 212D mit jeweils einem Ausgleichsraumabschnitt 211A, 211B, 211C, 211D verbunden sind, um eine Verbindung zwischen dem Druckraum und dem Ausgleichsraum zu schaffen, solange der Kolben mit seiner Dichtung (beides nicht dargestellt) die Öffnungen 222A bis 222D nicht überfahren hat. Die den Zylinderraum 220 begrenzende zylinderförmige Wand ist mit Stegen 213 mit der Wand des Gehäuses der Geberarmatur verbunden. Dadurch ergibt sich eine höhere Steifigkeit. Anstelle der Stege 213 könnten auch Rippen oder Brücken oder andere Versteifungselemente vorgesehen werden. Wenn diese Elemente nicht bis zu dem Boden des Ausgleichsraums (die in Figur 11 bzw. in Figur 13 dargestellte untere Ebene) reichen, kann auch nur eine Ausgleichsbohrung vorgesehen werden, weil am Boden des Ausgleichsraum eine Verbindung zum Austausch des hydraulischen Mediums geschaffen ist.

Auf der den Zylinderraum 220 abschließenden Stirnwand sind Rippen 214 ausgebildet, die im Wesentlichen kreuzförmig angeordnet sind. Diese Rippen 214 dienen der Versteifung und können gegebenenfalls weggelassen werden.

In der Mitte des durch die Rippen 214 gebildeten Kreuzes ist eine Vertiefung 215 vorgesehen, in die eine Ausbuchtung 234 des Balgs 230 eingreifen kann.

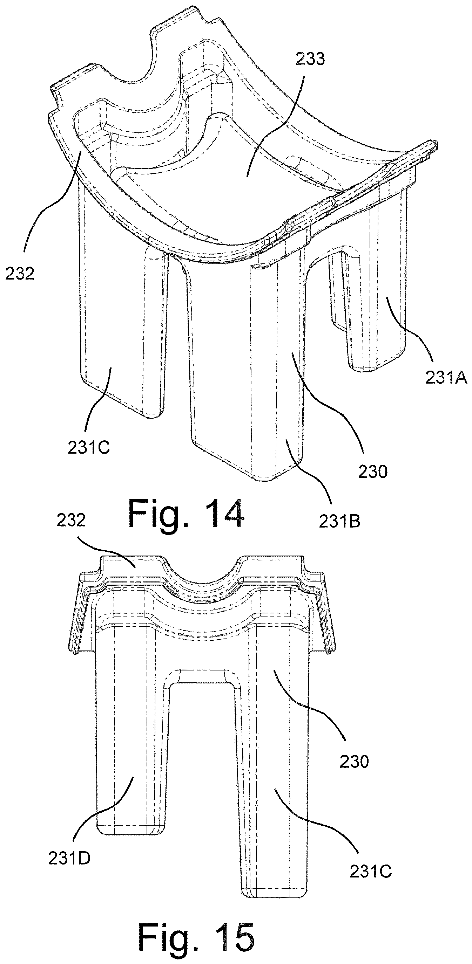

Der Balg 230 ist in den Figuren 14 bis 17 dargestellt. Der Balg 230 weist vier Fortsätze 231A, 231B, 231C, 231D auf, die sich von einer Fläche 233 nach unten erstrecken. Die Fortsätze umfassen im Wesentlichen L-förmige Säulen, die derart ausgebildet sind, dass sie das um den Zylinderraum zur Verfügung stehende Volumen möglichst optimal ausnutzen. Der Balg 230 weist einen umlaufenden Rand 232 auf, der entsprechend dem Rand des Gehäuses der Geberarmatur geformt ist, damit er mit einem Deckel gegenüber dem Gehäuse abgedichtet werden kann, um einen nach außen abgedichteten Ausgleichsraum zu schaffen, dessen Volumen durch Verformung des Balgs an die in dem Ausgleichsraum vorhandene Menge an hydraulischem Fluid angepasst werden kann.

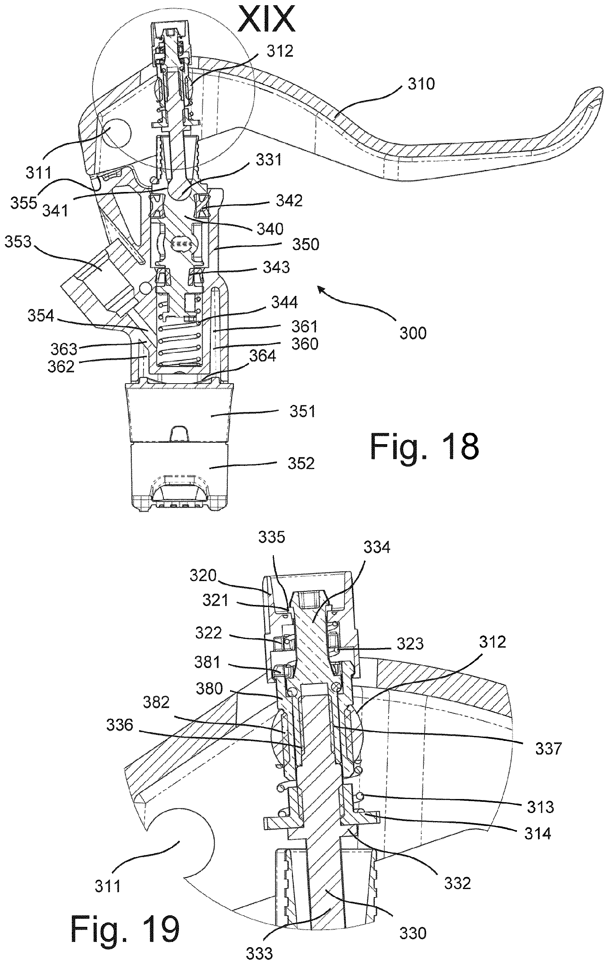

Die Figuren 18 und 19 zeigen eine Geberarmatur 300 einer hydraulischen Scheibenbremse gemäß der Erfindung. Die Geberarmatur 300 weist einen Bremshebel 310 auf, der über einen Bolzen 311 drehbar an dem Gehäuse der Geberarmatur gelagert ist. Die Geberarmatur weist ein Gehäuse 350 auf, das über zwei das Lenkerrohr aufnehmende Halbschalen 351, 352 an dem Lenkerrohr befestigbar ist. Das Lenkerrohr selbst ist bei diesem Ausführungsbeispiel nicht dargestellt. In dem Zylinderraum der Geberarmatur ist ein Kolben 340 auf bekannte Weise verschiebbar angeordnet. Der Kolben 340 ist über Dichtungen 342 und 343 gegenüber der Zylinderwand abgedichtet.

Die Einstellvorrichtung weist einen Knopf 320 auf, der auf einer Spindel 330 angeordnet ist. Die Spindel 330 ist mit dem Kolben 340 verbunden. Die Spindel 330 weist einen Kopf 331 auf, der fest in eine Aufnahme 341 des Kolbens 340 eingerastet ist, derart, dass eine axiale Bewegung der Spindel 331 nicht möglich ist, während die Spindel 330 sich gegen den Kolben 340 verkippen kann, was bei der Betätigung der Geberarmatur notwendig ist. Die Spindel 330 weist einen Bund 332 auf. Die Spindel 330 ist zweiteilig ausgeführt und weist einen dem Kolben näheren Teil 333 (unteres Teil) und einen mit dem Betätigungsknopf 320 der Einstellvorrichtung verbundenen äußeres Teil (oberes Teil) 334 auf. Das obere Spindelteil 334 ist mit dem unteren Spindelteil 333 über eine Gewindeverbindung miteinander verbunden, d.h., dass die Länge der Spindel 330 bei Verdrehen des oberen Teils 334 gegen den unteren Teil 333 größer bzw. kleiner wird. Der obere Teil 334 der Spindel weist eine Außenverzahnung 335 auf, die in der in Figur 19 gezeigten Stellung des Knopfes 320 mit einer Innenverzahnung 321 in Eingriff ist. Durch Drehen des Knopfes 320 dreht sich somit der äußere Teil 334 der Spindel 330 wegen des Eingriffs der Verzahnung 321 mit der Verzahnung 335. Somit dreht sich das äußere Teil 334 mit seinem Innengewinde 336 auf dem Außengewinde 337 des inneren Teils 333 der Spindel 330. Dadurch verändert sich die Länge der Spindel und somit die Lage des Kolbens 340 in dem Zylinderraum. Dadurch kann der Druckpunkt bzw. der Leerweg, d.h. der Weg des Kolbens 340, den der Kolben 340 in dem Zylinder zurücklegen muss, damit die Dichtung 343 die Ausgleichsbohrung überfährt, verändert werden.

Die Geberarmatur weist ferner eine Rasthülse 380 auf, die mit einem Außengewinde 382 in einen in einer Aufnahme aufgenommenen Bolzen 312 eingeschraubt ist. Die Rasthülse 360 weist eine stirnwandige Verzahnung 381 auf. Der Knopf 320 der Einstellvorrichtung weist eine Verzahnung 322 auf, die durch Drücken des Knopfes 320 in Richtung des Kolbens mit der stirnseitigen Verzahnung 361 der Rasthülse 360 in Eingriff bringbar ist. Durch Drücken des Knopfes 320 kann somit durch Drehen des Knopfes 320 in Folge des Eingriffs der Verzahnung 322 mit der Verzahnung 361 die Rasthülse 360 in dem Bolzen 312 verdreht werden, so dass die Griffweite verstellt werden kann. In dem Knopf 320 ist eine Feder 323 vorgesehen, die den Knopf 320 nach außen vorspannt. Durch diese Vorspannung ist gewährleistet, dass die Einstelleinrichtung immer in der Stellung zum Verstellen des Leerwegs bzw. des Druckpunkts ist, wenn nicht aktiv auf den Knopf 320 gedrückt wird.

Zur Einstellung der Griffweite muss der Knopf 320 aktiv in Richtung des Kolbens 340 gedrückt werden, und die Feder 322 gewährleistet, dass der Knopf 320 nach erfolgter Griffweiteneinstellung wieder in seine ursprüngliche Lage zurückspringt, in der der Leerweg bzw. Druckpunkt eingestellt werden kann.

Die Geberarmatur 300 weist eine Feder 313 auf, die den Hebel 310 in seine Ruhestellung vorspannt, das heißt um den Drehpunkt 311 gegen den Anschlag 355 des Gehäuses. Dadurch wird die Aufnahme für den Bolzen 312 nach außen gespannt. Die Feder 313 stützt sich an dem äußeren Teil 334 der Spindel 330 und auf der gegenüberliegenden Seite an einer Mutter 314 ab, die gegen ein Verdrehen gesichert ist.

In dem Gehäuse 350 der Geberarmatur ist ein Ausgleichsraum 360 vorgesehen, der mehrere Sektoren aufweist. Dargestellt ist der auf der der Befüllöffnung 353 gegenüberliegenden Seite angeordnete Abschnitt 361. Auf der diesem Abschnitt gegenüberliegenden Seite ist der Übergangsbereich 362 zwischen zwei nicht dargestellten Abschnitten des Ausgleichsraums dargestellt, die durch einen Steg 363 getrennt sind, durch die der Kanal 354 läuft. Zwischen dem Gehäusedeckel 351 und dem Gehäuse 350 ist ein den Ausgleichsraum 360 begrenzender Balg 364 angeordnet. Gemäß einer Ausführung der Erfindung kann der Balg beispielsweise wie in den Figuren 13 bis 17 gezeigt ausgebildet sein. Bei der vorliegenden Ausführung der Figuren 18 und 19 weist der Ausgleichsraum 360 drei Ausgleichsraumabschnitte auf, das heißt den Ausgleichsraumabschnitt 361, der der Befüllöffnung 353 gegenüberliegt und über zwei Stege von zwei weiteren Abschnitten getrennt ist, die im wesentlichen symmetrisch zu der Befüllöffnung 353 angeordnet sind. Die Ausgleichsräume erstrecken sich jeweils über ungefähr 120°. Alternativ können sich die Ausgleichsräume auch über unterschiedliche Winkelbereiche um den Zylinderraum herumstrecken. Beispielsweise könnte der der Befüllöffnung 353 gegenüberliegende Ausgleichsraum sich über 180° erstrecken, und die an den Seiten des der Befüllöffnung bzw. des Kanals 354 angeordneten Ausgleichsräume könnten sich über ungefähr jeweils 90° erstrecken, wobei der Winkelbereich um das Maß der die Ausgleichsraumabschnitte trennenden Stege reduziert sein müsste.

Die Geberarmatur 300 ist mit dem Deckel 351 und dem Gegenstück 352 an dem nicht dargestellten Lenker befestigt. Zur Erleichterung der Montage kann das Gegenstück 352 einen Winkelbereich von weniger als 180° aufweisen, der das Lenkerrohr einschließt, und der Deckel 351 kann einen Winkelbereich einschließen, der mehr als 180° umfasst. Das hat den Vorteil, dass die Geberarmatur 300 auf das Lenkerrohr aufgedrückt werden kann, so dass eine einfache und leichte Montage erfolgen kann.

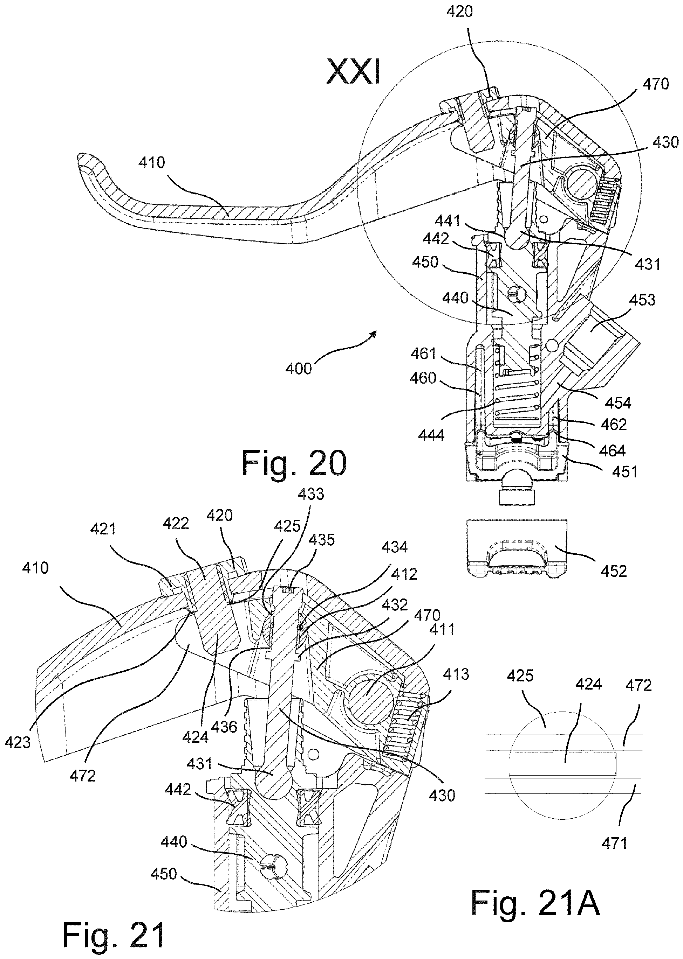

Die Figuren 20 bis 21A zeigen eine weitere Ausführung einer Geberarmatur einer erfindungsgemäßen hydraulischen Bremse oder Kupplung. Die gleichen Bauteile sind mit entsprechenden Bezugszeichen bezeichnet, die um 100 gegenüber der Ausführung der Figuren 18 bis 19 erhöht sind. Im Folgenden werden nur die Unterschiede beschrieben und im übrigen auf die Beschreibung der anderen Ausführungsbeispiele und insbesondere die Beschreibung des Ausführungsbeispiels der Figuren 18 und 19 verwiesen. Das Ausführungsbeispiel der Figuren 20 bis 21A unterscheidet sich von dem Ausführungsbeispiel in den Figuren 18 und 19 durch eine unterschiedliche Einstellvorrichtung, die ein getrenntes Betätigungsglied für die Einstellung der Griffweite und die Einstellung des Druckpunkts aufweist. Der Hebel 410 ist um einen Bolzen 411 drehbar gelagert. Dazu ist ein Druckstück 470 vorgesehen, das um den Bolzen 411 drehbar gelagert ist. Der Hebel 410 stützt sich an dem Druckstück 470 über eine Einstellvorrichtung für die Griffweite ab. Zwischen dem Druckstück 470 und dem Hebel 410 ist eine Feder 413 vorgesehen, die den Hebel 410 bei der Einstellvorrichtung gegen das Druckstück 470 vorspannt. Die Einstellvorrichtung für die Griffweite 420 weist einen Drehknopf 421 auf, der in dem Hebel 410 um seine Achse drehbar gelagert ist. In Position wird er durch einen Bund 423 gehalten. Ein Abstandshalter 422 ist in dem Drehknopf 421 angeordnet. Im Bereich des Drehknopfs 421 weist er ein Außengewinde auf, das mit einem Innengewinde des Drehknopfs 421 verbunden ist. Das Druckstück 470 weist im Bereich des Einstellknopfs bzw. Abstandhalters 422 zwei voneinander beabstandete Fortsätze 471, 472 auf, zwischen denen sich ein Fortsatz 424 des Abstandshalters 423 erstreckt. Zwischen dem Gewindeabschnitt und dem Fortsatz 424 ist ein Flansch 425 vorgesehen, der bei der dargestellten Ausführung eine im Wesentlichen kreisförmige Form aufweist. Mit dem Flansch stützt sich die Einstellvorrichtung auf dem Druckstück ab. Da der Drehknopf 421 in axialer Richtung fest mit dem Hebel 410 verbunden ist, schützt sich somit der Hebel 410 über den Knopf 421 und den Abstandshalter 422 und dem Flansch 425 auf dem Druckstück 470 ab.

Figur 21A zeigt eine Ansicht des Abstandshalters 422 und eines Teils des Druckstücks der Geberarmatur 400 von Figur 20 aus der Richtung des Kolbens 340, wobei die übrigen Teile der Übersicht halber weggelassen sind.

Zur Verstellung der Griffweite wird der Drehknopf 421 gegenüber dem zwischen den beiden Fortsätzen 471, 472 des Drehstück 470 drehfest gehaltenen Abstandshalter 422 verdreht, so dass die relative Lage zwischen Drehknopf 421 und dem Abstandshalter 423 verschoben wird. Dadurch verstellt sich die Griffweite.

Die Ausführung gemäß den Figuren 20 bis 21A weist ferner eine Einstellvorrichtung für den Leerweg bzw. Druckpunkt auf. Dazu wird die Spindel 430 in einer Hülse 433 verdreht, die über Stifte 434 drehfest mit einem Bolzen 412 verbunden ist, der in der Aufnahme des Druckstücks 470 angeordnet ist. Zur Verdrehung weist die Spindel 430 einen Werkzeugeingriffabschnitt 435 auf. Durch Drehen der Spindel 430 wird somit der Abstand zwischen der Hülse 433 und dem Bund 432 verstellt, der den Leerweg 436 definiert.

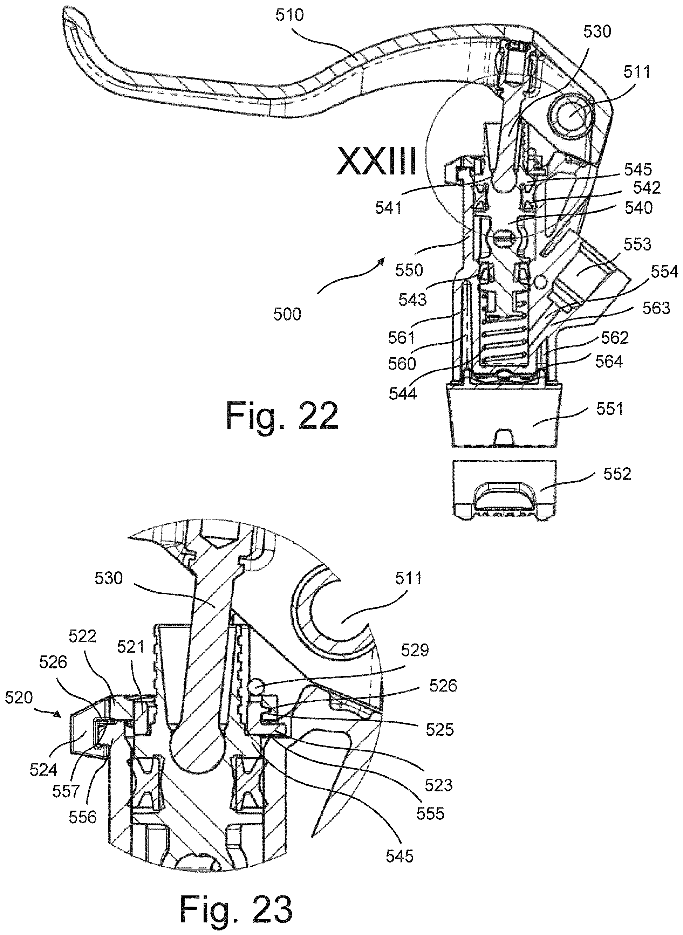

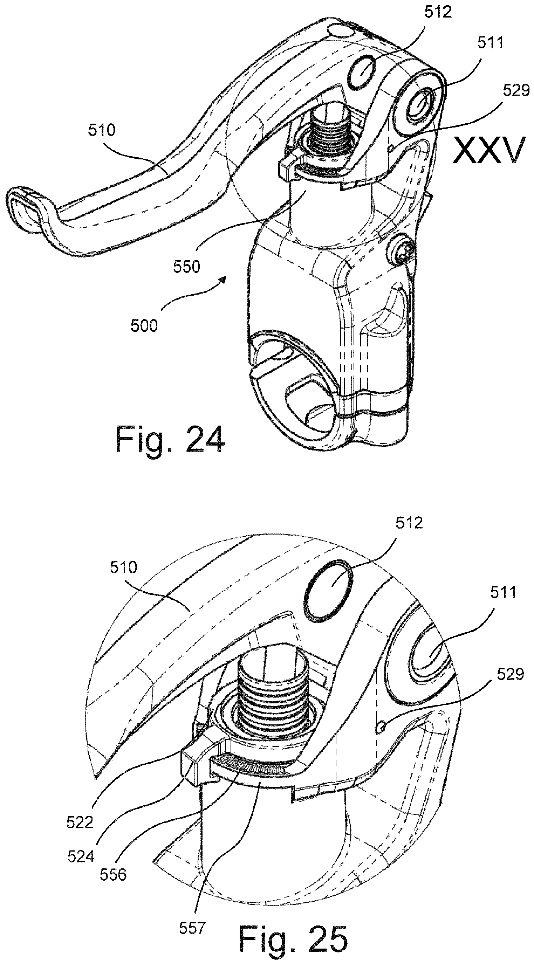

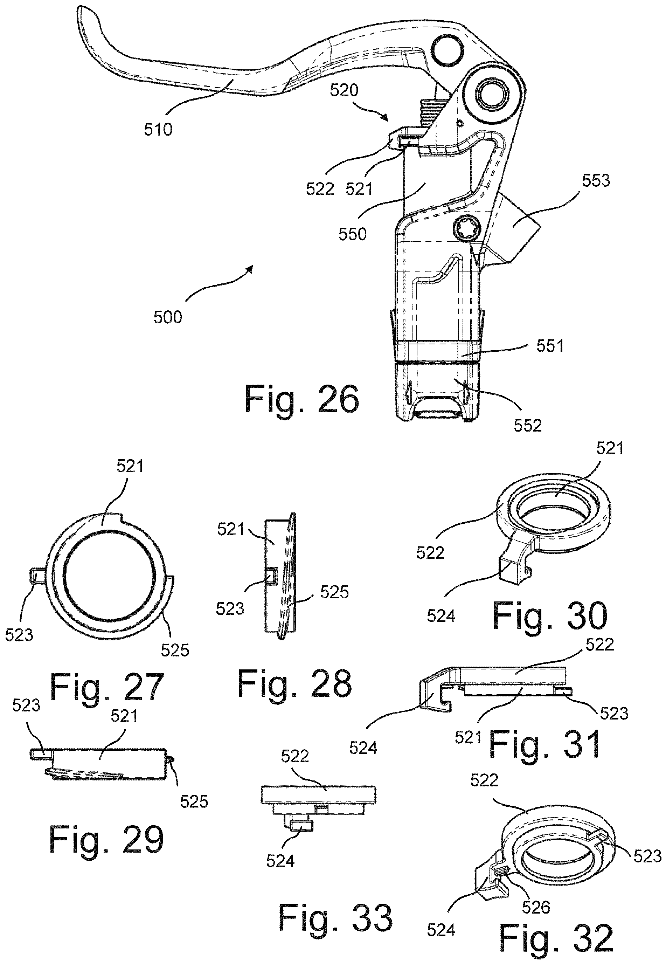

Die Figuren 22 bis 32 zeigen eine weitere Ausführung einer Geberarmatur einer hydraulischen Bremse oder Kupplung gemäß der vorliegenden Erfindung. Die Ausführungsform der Figuren 22 bis 33 entspricht im Wesentlichen den Ausführungsformen, die in Figuren 18 bis 19 bzw. 20 bis 21A gezeigt und beschrieben sind. Gleiche Bauteile werden mit gleichen Bezugszeichen bezeichnet, die gegenüber der Ausführungsform der Figuren 18 bis 19 um 200 bzw. gegenüber der Ausführungsform der Figuren 20 bis 21A um 100 erhöht sind. Im Folgenden wird nur der Unterschied zu den Ausführungsformen, die in den Figuren 18 bis 19 bzw. 20 bis 21A gezeigt sind, beschrieben. Außerdem wird auf die übrige Beschreibung und insbesondere die Beschreibung der Ausführungsbeispiele der Figuren 18 bis 19 und 20 bis 21A verwiesen.

Die in den Figuren 22 bis 33 beschriebene Geberarmatur gemäß einer Ausführung der Erfindung kann in Verbindung mit einer hydraulischen Bremse oder hydraulischen Kupplung verwendet werden, vorzugsweise bei einem lenkergeführten Fahrzeug, beispielsweise einem Fahrrad oder Motorrad.

Die in den Figuren 22 bis 33 dargestellte Geberarmatur weist eine Einstellvorrichtung 520 zur Verstellung des Endanschlags des Kolbens 540 auf. Der Kolben 540 ist in einer Zylinderbohrung in dem Gehäuse 550 verschiebbar aufgenommen. In einer Aufnahme 541 ist ein Kopf 531 einer Spindel 530 eingerastet. Die Spindel ist mit einem Hebel 510 verbunden, der um einen Bolzen 511 drehbar gelagert ist. Der Kolben 540 weist einen Bund 545 auf, der die Endlage des Kolbens in der Geberarmatur durch seinen Anschlag gegen die Einstellvorrichtung 520 definiert.

Die Einstellvorrichtung 520 weist ein Anschlagteil 521 auf, das einen Fortsatz 523 umfasst, der in eine Aufnahme 555 des Gehäuses 550 eingreift. Das Anschlagteil 521 ist drehfest in dem Gehäuse 550 angeordnet. Der Fortsatz 523 ist dazu in der Aufnahme 555 des Gehäuses 550 aufgenommen. Die dem Bund 545 des Kolbens 540 gegenüberliegende Seite des Anschlagsteils 521 dient dabei als Anschlagfläche, die Drehlage bzw. die Orientierung des Kolbens 540 in dem Gehäuse 550 der Geberarmatur 500 definiert. In den Figuren ist der Kolben 540 in seiner Endlage dargestellt, das heißt, dass der Kolben 540 mit dem Bund 545 an dem Anschlagteil 521 anliegt. Der Fortsatz 523 ist derart in der Aufnahme 555 angeordnet, dass er sich in axialer Richtung des Kolbens aber nicht in Umfangsrichtung des Kolbens bewegen kann. Das Anschlagsglied 521 weist einen Flansch mit einem Außengewinde 525 auf. Das Außengewinde umfasst eine Windung von ungefähr einer Dreiviertelumdrehung, das heißt weniger als einen Gewindegang. Die Einstellvorrichtung 520 umfasst des Weiteren ein Betätigungsglied 522, das ein dem Außengewinde 525 entsprechendes Innengewinde 526 aufweist, in dem das Außengewinde des Anschlagsglieds aufgenommen ist. Das Einstellglied 522 umfasst ein Betätigungselement 524, an dem der Benutzer angreifen kann, um das Einstellglied relativ zu dem Anschlagglied 521 um die Achse des Kolbens zu verdrehen. Dadurch verändert sich die relative Lage des Anschlagsglieds in dem Einstellglied 522, die die Endlage des Kolbens 540 definiert.

Das Einstellglied 522 hintergreift mit dem Betätigungsglied 524 einen Bund 557 des Gehäuses. Auf der gegenüberliegenden Seite ist das Einstellglied durch einen Stift 529 entgegen der Betätigungsrichtung bei Betätigung der Geberarmatur 500 gesichert. Der Stift 529 ist in dem Gehäuse gelagert. Im Bereich des Stiftes 529 kann der Kolben auch eine Abflachung aufweisen (wie bei der Ausführung gemäß Figuren 34, 41 und 42 gezeigt), so dass der Kolben 540 in einer eindeutigen Drehlage in dem Gehäuse 550 angeordnet ist, so dass die Erfassung der Stellung des Kolbens 540 erleichtert werden kann.

Das Einstellglied 522 weist einen Vorsprung 526 auf, der in eine auf dem Bund 557 vorgesehene Rastierung 556 eingreift, um eine ungewollte Verstellung der Einstellvorrichtung zu verhindern. Zur Betätigung der Einstellvorrichtung 520 ist eine Kraft notwendig, die ausreichend ist, um den Vorsprung 526 über die Rastierung 556 zu bewegen. Durch Verdrehen des Einstellglieds 521 um die Achse des Kolbens 540 wird das Gewinde zwischen dem Einsteckglied 522 und dem Abstandsglied 521 verdreht, so dass sich das Abstandsglied 521 gegenüber dem Einsteckglied 522 und damit gegenüber dem Stift 529 und dem Bund 557, das heißt gegenüber dem Gehäuse 550 in axialer Richtung des Kolbens bewegt, so dass die Endlage des Kolbens 540 verändert wird.

Die Figuren 34 und 35 zeigen weitere Ausführungen einer Geberarmatur einer hydraulischen Bremse oder Kupplung gemäß der vorliegenden Erfindung.

Die Ausführungsform der Figur 34 entspricht insbesondere im Wesentlichen der Ausführungsform, die in Figuren gezeigt und beschrieben ist. Gleiche Bauteile werden mit gleichen Bezugszeichen bezeichnet, die gegenüber der Ausführungsform der Figuren 20 bis 21A um 200 erhöht sind. Im Folgenden wird nur der Unterschied zu der Ausführungsform gemäß den Figuren 20 bis 21A beschrieben. Außerdem wird auf die übrige Beschreibung und insbesondere die Beschreibung der Figuren 20 bis 21A verwiesen.

Die Geberarmatur 600 gemäß Figur 34 weist eine Einstellvorrichtung 620 für die Griffweite auf. Ein Abstandsglied 621 ist in den Hebel 610 eingeschraubt und stützt sich auf dem Druckstück 670 ab. Dadurch wird die relative Lage, das heißt der Winkel zwischen dem Druckstück 670 und dem Hebel bezogen auf den Bolzen 611 verstellt. Unabhängig von der Verstellung der Griffweite kann der Druckpunkt bzw. der Leerweg durch das Betätigungsglied 622 bestellt werden, das die Spindel 630 in den Bolzen 612 verdreht, der in dem Druckstück 670 aufgenommen ist. Dabei wird der Leerweg zwischen einer drehfest gegenüber der Spindel angeordneten Hülse 623 und dem Bolzen 612 verstellt. Die Hülse 623 weist dabei ein Innengewinde auf, das mit einem an der Spindel vorgesehenen Außengewinde zusammenwirkt. Die maximale Einstellbarkeit ist durch einen Anschlag 639 begrenzt, der als ein an der Spindel 630 angeordneter Bund ausgebildet ist.

Der Stift 629 ist in dem Gehäuse angeordnet und definiert eine feste Drehlage des Kolbens 640, in dem der Stift 629 an einer an dem Kolben 640 ausgebildeten Fläche bzw. Abflachung 649 bei der Betätigung der Geberarmatur 600 entlang gleitet.

Der Stift 629 definiert die Endlage des Kolbens 640 in dem Gehäuse 650. Der Stift ist bei der dargestellten Ausführung aus Stahl ausgebildet und weist eine Stärke von ca. 1,5 mm auf. Damit sich der Stift trotz seiner geringen Abmessung (Durchmesser 1,5 mm) nicht verbiegt, ist als Sollbruchstelle die Verbindung zwischen dem Kopf 631 der Spindel 630 und der Aufnahme 641 in dem Kolben vorgesehen. Starke Kräfte können beispielsweise bei einem Sturz auftreten, bei dem der Hebel 610 entgegen der Betätigungsrichtung nach außen gedreht wird.

Da die Fläche bzw. Abflachung 649 eine abgeflachte Fläche im äußeren Bereich des Kolbens 640 ist bzw. aufweist, definiert der an dieser Abflachung 649 bzw. Fläche anliegende Stift 629 die Drehlage des Kolbens. Das hat den Vorteil, dass die relative Stellung des Kolbens 640 in axialer Richtung, das heißt, dass das Maß der Betätigung leichter erfasst werden kann. Insbesondere ist es nicht unbedingt notwendig, eine Kolbenlageerfassungseinrichtung 680 vorzusehen, die unabhängig von der Drehlage des Kolbens 640 in der Zylinderbohrung die Lage des Kolbens erfassen kann, d.h. die Lage des Kolbens 640 in axialer Richtung, d.h. ein Maß für die Betätigung der Geberarmatur 600. Beispielsweise kann die Kolbenlageerfassungseinrichtung einen Magneten 681 umfassen, der mit einem Sensor 682 zusammenwirkt, um die axiale Lage des Kolbens 640 in der Zylinderbohrung des Gehäuses 650 zu erfassen. Wenn der Kolben durch den Stift in einer bestimmten Drehlage gehalten wird, kann der Magnet 681 ein Stabmagnet sein. Der Magnet ist dabei vorzugsweise quer in dem Kolben 640 eingepresst und mit der Umfangsfläche der Kolbens 640 bündig bzw. mit diesem vergossen. Vorzugsweise ist der Magnet möglichst nahe an der Umfangsfläche des Kolbens 640 angeordnet, um eine möglichst gute Signalerzeugung zu ermöglichen. Der Sensor 682 kann beispielsweise einen Reedkontakt bzw. einen Hallsensor umfassen. Andere dem Fachmann bekannte Einrichtungen zur Erfassung einer axialen Stellung eines in einer Bohrung verschiebbar angeordneten Bauteils sind denkbar.

Gemäß einer nicht dargestellten Ausführung kann auch ein Clip vorgesehen werden, der den Kopf 631 der Spindel 630 in der Aufnahme 641 des Kolbens sichert. Das hat den Vorteil, dass die Feder 644 gegebenenfalls entfallen bzw. eine geringere Federkonstante aufweisen kann, weil der Hebel den Kolben in die Ruhelage zurückzieht, wenn beispielsweise die Feder 613 entsprechend stark ausgebildet ist. Nachteilig könnte sein, dass die Sollbruchstelle entfällt, die durch den in der Aufnahme 641 angeordneten Kopf 631 der Spindel 630 gebildet wird.

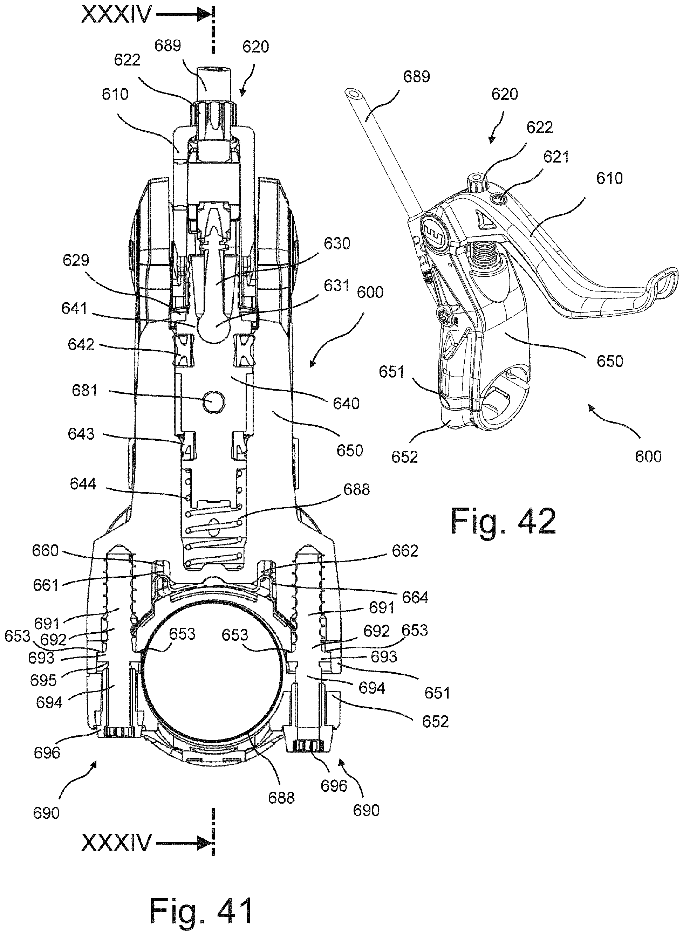

Figur 41 zeigt eine Schnittansicht der Geberarmatur von Figur 34 entlang der Linie XLI-XLI von Figur 34.

Insbesondere zeigt Fig. 41 die Befestigung der Geberarmatur an einem Lenkerrohr 688. Die Geberarmatur weist zwei Verbindungseinrichtungen 690 auf, die Stehbolzen umfassen. Die Verbindungseinrichtungen 690 weisen einen ersten Verbindungsabschnitt 691 auf, der jeweils in eine entsprechende Bohrung in dem Gehäuse 650 eingeschraubt ist. Anstelle einer Schraubverbindung kann auch eine Presspassung vorgesehen werden. Es kann auch eine Buchse in dem Gehäuse vorgesehen sein, in die der erste Verbindungsabschnitt eingepresst bzw. eingeschraubt bzw. geklebt ist. Es kann auch ein Stift und/oder Bolzen in dem Gehäuse vorgesehen sein, auf den der erste Verbindungsabschnitt (mit einem entsprechenden hohlen Abschnitt aufgeschraubt bzw. aufgepresst bzw. geklebt ist.

Die Verbindungseinrichtung 690 weist einen Bund 693 auf, der den Deckel 651 an das Gehäuse presst, sobald die Verbindungseinrichtung an dem Gehäuse 650 befestigt ist, und der Bund an den Anschlag 653 stößt um ein weiteres bzw. tieferes Eingreifen der Verbindungseinrichtung in das Gehäuse 650 zu begrenzen. Zur Abdichtung des Gehäuses 650 gegenüber dem Deckel 651 bzw. des Ausgleichsraums 660 kann der Balg 664 mit seinem Rand (siehe beispielsweise Figur 14, Bezugszeichen 232) zwischen das Gehäuse 650 und den Deckel 651 geklemmt werden. Der Ausgleichsraum 660 und der Balg 664 können vorteilhafterweise wie bei der in den Figuren 11 bis 17 gezeigten Ausführung ausgebildet sein. Das trifft auch für die anderen in der vorliegenden Offenbarung beschriebenen Ausführungen von Geberarmaturen zu.

Die Verbindungseinrichtung 690 weist einen Spezialwerkzeugeingriff 695 auf. Mit einem Spezialwerkzeug kann die Verbindungseinrichtung 690 an dem Gehäuse befestigt werden. In dieser Form kann die Geberarmatur an den Endkunden bzw. Benutzer vertrieben werden. Das hat den Vorteil, dass eine unbeabsichtige falsche Montage verhindert werden kann.

Die Verbindungseinrichtung 690 weist einen zweiten Verbindungsabschnitt 694 auf. Das Gegenstück 652 weist Aussparungen zur Aufnahme der zweiten Verbindungsabschnitte 694 auf. Zur Befestigung des Gegenstücks 652 an der Verbindungseinrichtung 690 sind Befestigungsmuttern 696 vorgesehen, die auf dem Fachmann bekannte Weise auf den zweiten Verbindungsabschnitt geschraubt werden. Bei der Verbindung zwischen Gegenstück 652 und Deckel 651 bzw. Gehäuse 650 wird das Lenkerrohr 688 zwischen dem Deckel 651 und dem Gegenstück 652 eingeklemmt.

Die Geberarmatur 600 weist eine Feder 613 auf, die vorzugsweise als Schenkelfeder ausgebildet ist. Die Feder 613 spannt das Druckstück 670 um den Bolzen 611 bzw. den durch den Bolzen definierten Drehpunkt gegenüber dem Gehäuse 650 nach außen vor. Dadurch ergibt sich der Vorteil, dass die Feder 613 das Spiel für den Benutzer subjektiv wegfallen lässt, d.h. den Leerweg zwischen dem Bolzen 612 und der Hülse 623, den der Benutzer bei der Betätigung überfahren muss, bevor die Spindel 630 nach unten in Richtung Kolben 640 bei Betätigung des Brems- bzw. Kupplungshebels 610 versetzt wird. Mit anderen Worten, spannt die Feder 613 das Druckstück 670 derart nach außen, dass der Leerweg zwischen Bolzen 612 und Hülse 623 bei der Betätigung vollständig überfahren werden muss und der Hebel 610 bzw. das Druckstück 670 nicht "wackelt". Gleichzeitig spannt die Feder 613 den das Druckstück 670 gegenüber dem Hebel 610 bzw. die darin angeordnete Griffweiteneinstellvorrichtung 621 nach außen, so dass dort ebenfalls kein Spiel vorhanden ist, sondern der Hebel 610 über die Griffweiteneinstellvorrichtung 621 immer an dem Druckstück 670 anliegt. Die Feder 613 hat somit eine Doppelfunktion indem die Feder 613 einerseits das Druckstück nach außen vorspannt (um den Leerweg bei der Betätigung zu schaffen, der den Druckpunkt definiert), und andererseits das Druckstück 670 gegenüber dem Bremshebel 610 nach außen vorspannt, um ein Spiel bei der Griffweiteneinstellvorrichtung 621 zu vermeiden.

Alternativ zu der dargestellten Schenkelfeder 613 kann auch eine andere Federeinrichtung vorgesehen werden, die ebenfalls das Gehäuse 650 von dem Druckstück 670 auseinanderdrückt bzw. voneinander weg vorspannt. Beispielsweise kann eine Druckfeder auf einer bezogen auf den Drehpunkt bzw. den Bolzen 612 der Spindel 630 gegenüberliegenden Seite angeordnet sein.

Die Ausführung der Figuren 34, 41 und 42 hat außerdem den Vorteil, dass die Griffweite unabhängig von dem Druckpunkt eingestellt werden kann.

Figur 35 zeigt eine weitere Ausführung der Erfindung, die im Wesentlichen der Ausführung von Figur 34 entspricht. Die entsprechenden Teile sind mit gleichen Bezugszeichen bezeichnet, die um 100 erhöht sind. Im Folgenden werden nur die Unterschiede zu der Ausführung von Figur 34 beschrieben und im Übrigen auf deren Beschreibung verwiesen.

Die Ausführung von Figur 35 unterscheidet sich von der Ausführung der Figur 34 dahingehend, dass nur eine Griffweitenverstellung vorgesehen ist, während eine Verstellung des Druckpunkts nicht vorgesehen ist. Die Griffweite wird durch Drehen der Spindel 730 in dem Bolzen 712 erreicht. Bei der Ausführung von Figur 35 ist nur das Signalglied 781 dargestellt. Der Sensor ist in dieser Schnittansicht nicht dargestellt. Er ist neben dem Signalglied 781 im Gehäuse 750 vorgesehen. Die Verdrehsicherung des Kolbens 740 wird bei der Ausführung von Figur 35 dadurch erreicht, dass der Kolben eine Abflachung 749 aufweist, an die der Stift 729 in der Ruhelage des Kolbens zur Anlage kommt. Dadurch wird der Kolben immer wieder in der Ruhelage in die Ausgangsstellung zurückgedreht. Da auf den Kolben keine Kräfte in Umfangsrichtung wirken, kann durch diese zeitweise Ausrichtung des Kolbens ein Verdrehen des Kolbens mit hinreichender Sicherheit verhindert werden.

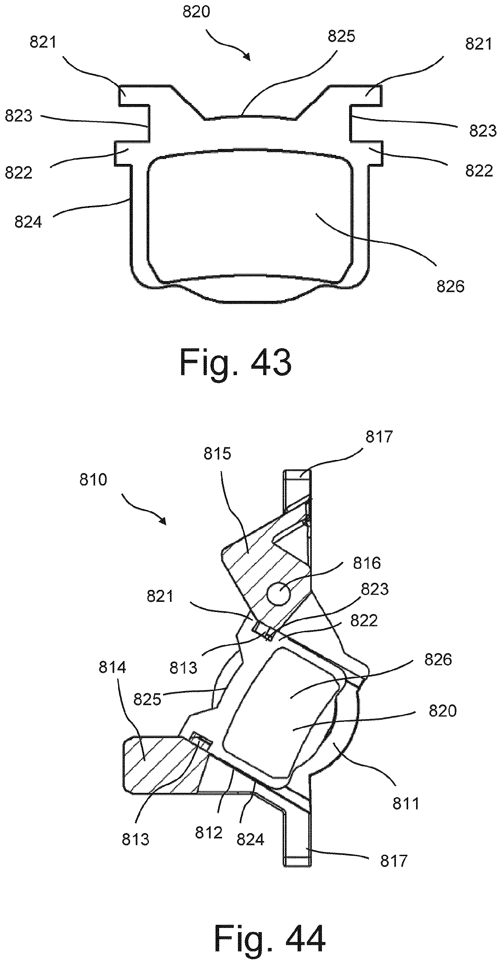

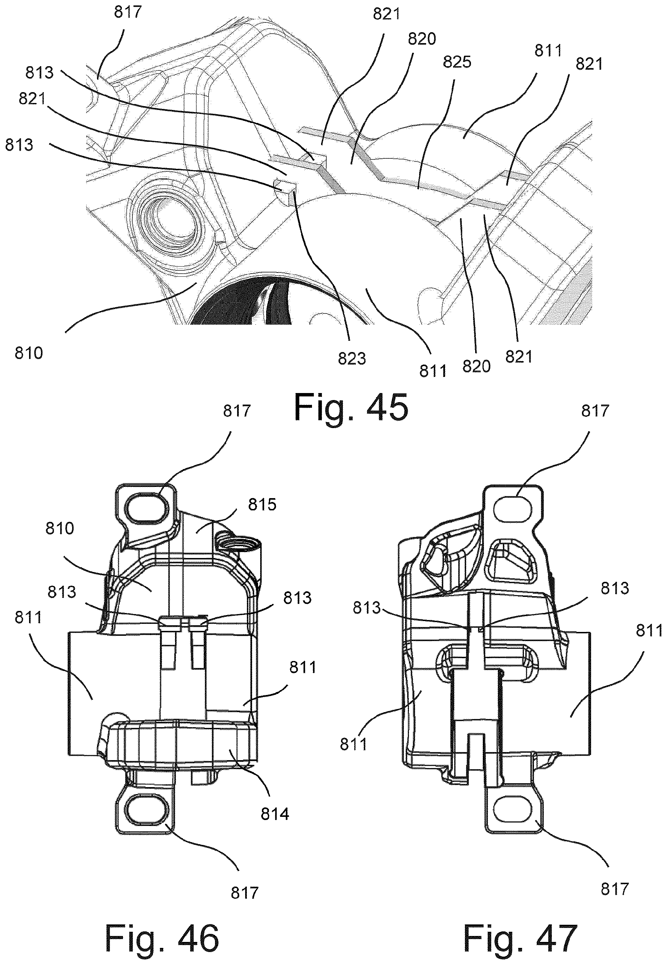

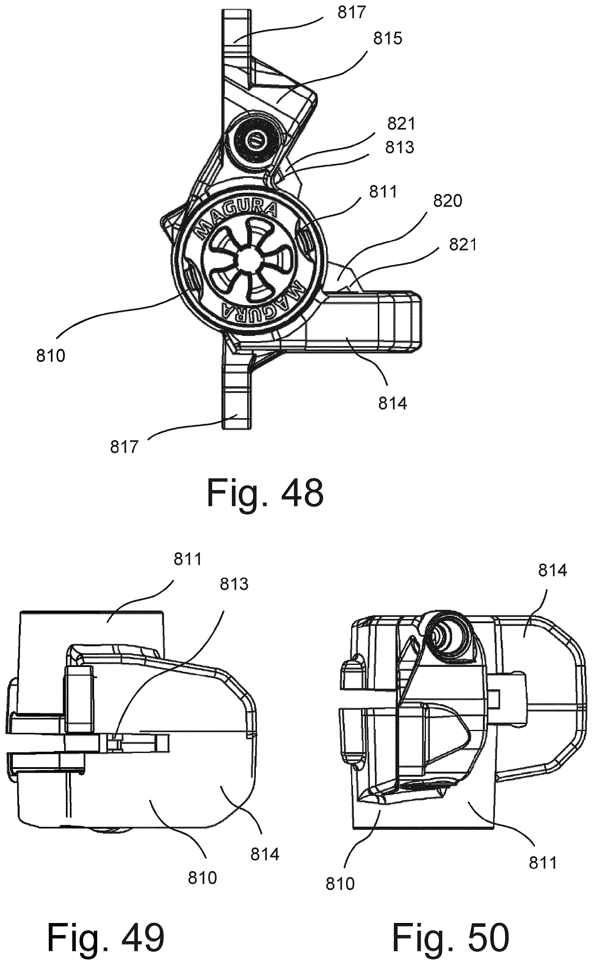

Die Figuren 43 bis 50 zeigen eine Bremszange 810 gemäß einer Ausführung mit einem Bremsbelag 820 gemäß einer Ausführung der Erfindung. Bei diesen Ausführungen der Erfindung liegt eine Besonderheit in der Halterung der Bremsbeläge 820 an der Bremszange 810.

Die Bremsbeläge 820 weisen an Ihrer Oberseite Fortsätze 821, 822 auf, die paarweise jeweils zur Seite vorstehen. Zwischen den beiden Fortsätzen 821, 822 eines jeden Paares ist eine Aussparung 823 vorgesehen, in die eine Schiene zur Halterung des Bremsbelags 820 eingreifen kann. Da auf beiden Seiten des Bremsbelags 820 eine derartige Aussparung 823 vorgesehen ist, kann eine sichere Halterung des Bremsbelags durch eine beidseitige Aufnahme erreicht werden.

Der Bremsbelag 820 weist ferner einen Reibbelag 826 auf, der auf dem Fachmann bekannte Weise befestigt und aufgebaut ist. An den Seiten weist der Bremsbelag 820 jeweils Anlageflächen 824 auf, mit denen sich der Bremsbelag 820 beim Bremsen an der Bremszange 810 abstützen kann.

Zwischen den beiden oberen Fortsätzen 821 weist der Bremsbelag 820 an seiner Oberseite eine Aussparung 825 auf. Diese Aussparung 825 dient der Gewichtsreduzierung und kann bei anderen Ausführungen der Erfindung nicht vorgesehen werden, ohne den Schutzbereich zu verlassen.

Die Bremszange 810 weist ein Paar Bremszylinder 811 auf, die einen Schacht einschließen, in dem die Bremsbeläge 820 aufgenommen werden. An seinen Seiten weist der Schacht Bremsbelaganlageflächen 812 auf, an denen sich die Bremsbeläge 820 beim Bremsen abstützen.

Die Bremszange 810 weist einen Scheibenraum zur Aufnahme einer nicht dargestellten Bremsscheibe auf. Zur Erhöhung der Steifigkeit sind an beiden Seiten Versteifungsglieder 814 bzw. 815 vorgesehen. Wegen deren Funktion wird auf die Beschreibung der anderen Figuren und Ausführungsbeispiele der vorliegenden Anmeldung verwiesen.

Die Figuren zeigen auch den Hydraulikkanal 816 und die Anschlussabschnitte 817 zur Befestigung der Bremszange 810 an einem Rahmenteil bzw. einer Gabel eines Fahrrads

Oberhalb des Schachtes bzw. oberhalb der Bremsbelaganlageflächen 812 ist eine Bremsbelagaufnahme 813 vorgesehen. Die Bremsbelagaufnahme 813 ist eine unterbrochene Schiene, die auf beiden Seiten des Schachtes oberhalb der Bremsbelaganlageflächen 812 vorgesehen sind. Die Bremsbelagaufnahme 813 ist in der Mitte, d.h. in der Ebene, in der sich bei montierter Bremse die Bremsscheibe befindet, unterbrochen, d.h. dass sich die Bremsbelagaufnahme 813 zu beiden Seiten dieser Ebene erstreckt.

Diese Ausbildung hat den Vorteil, dass der Bremsbelag 820 auf einfache Weise in der Bremszange 810 montiert bzw. gewechselt werden kann.

Zur Montage wird der Bremsbelag 820 von unten in den Schacht der Bremszange 810 gesteckt, d.h. aus einer Richtung, in der die Bremsscheibe bei einer montierten Bremszange 810 wäre. Die Bremsscheibe muss bekanntermaßen bei der Monatage von Bremsbelägen in Bremszangen entfernt sein. Da die Bremsbelagaufnahme 813 in der Ebene der Bremsscheibe ausgespart ist, kann der Bremsbelag 820 in der Ebene der Bremsscheibe vor die Bremsbelagaufnahme 813 angeordnet werden, und dann seitlich auf die Bremsbelagaufnahme geschoben werden. Sobald ein Bremsbelag zu einer Seite geschoben wurde, kann der andere Bremsbelag auf die entgegengesetzte Seite geschoben werden. Die beiden Bremsbeläge 820 können somit quasi wie ein Kleiderbügel auf eine Kleiderstange gehängt werden, ohne dass es erforderlich ist, wie im Stand der Technik, die Kleiderstange (d.h. den Bolzen, der den Bremsbelag sichert) zu entfernen. Sobald die Bremsscheibe wieder in dem Schacht und somit zwischen den Bremsbelägen angeordnet ist, sichert die Bremsscheibe die Bremsbeläge in der Bremszange gegen ein Herausfallen, weil die Bremsbeläge zur Demontage bzw. zum Wechseln in die Ebene der Bremsscheibe bewegt werden müssen. Diese Ebene ist jedoch durch die Bremsscheibe blockiert. Als zusätzliche Sicherung und zur Vermeidung von unerwünschten Klapper- bzw. Schleifgeräuschen kann zusätzlich eine Federeinrichtung 930 vorgesehen sein, die die Bremsbeläge in Richtung der Jeweiligen Bremskolben von der Bremsscheibe weg spannt.

Das Vorsehen der Bremsbelagaufnahme oberhalb des Schachtes bzw. oberhalb des Scheibenraumes der Bremszange 810 hat den weiteren Vorteil, dass die Bremszange besonders kostengünstig hergestellt werden kann, weil mehrere Bremszangen mit einem Werkzeug gleichzeitig gefertigt werden können. Das ist der Fall, weil beim Entformen die Formteile nicht in verschiedene Richtungen abgezogen werden müssen.

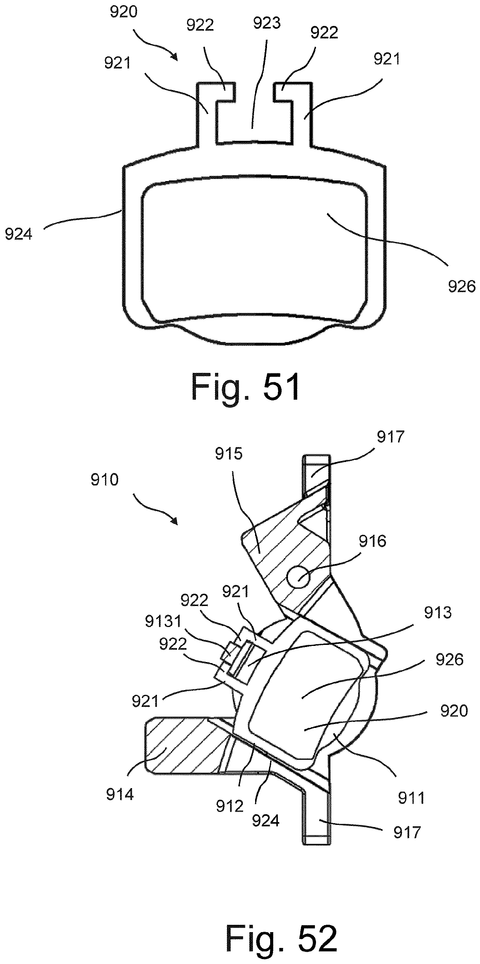

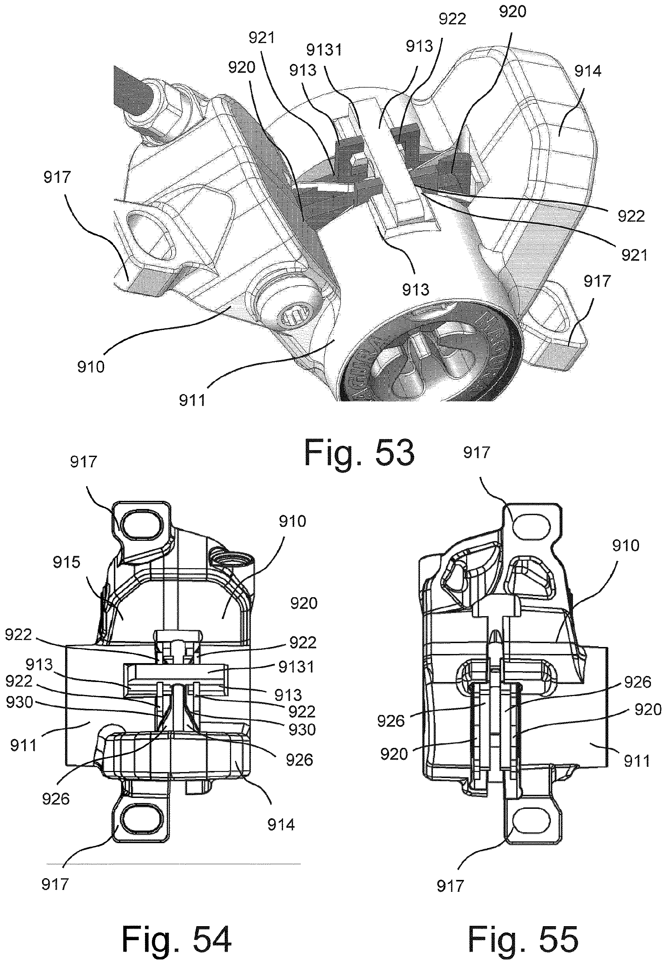

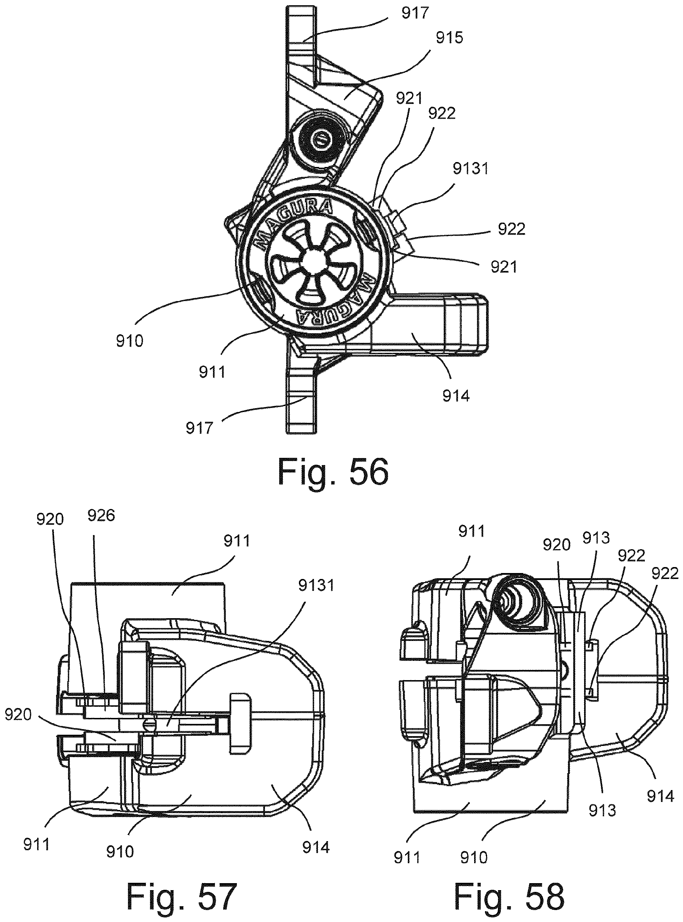

Die Figuren 51 bis 58 zeigen eine Bremszange 910 gemäß einer weiteren Ausführung mit einem Bremsbelag 920 gemäß einer weiteren Ausführung der Erfindung. Bei diesen Ausführungen der Erfindung liegt ebenfalls eine Besonderheit in der Halterung der Bremsbeläge 920 an der Bremszange 910.

Die beiden Ausführungen der Erfindung gemäß den Figuren 43 bis 50 bzw. 51 bis 58 sind ähnlich, Daher werden im Folgenden vor allem die Unterschiede der Ausführungen beschrieben und im Übrigen auf die Beschreibung der anderen Ausführung verweisen. Ähnliche bzw. sich entsprechende bzw. gleiche Teile sind mit den gleichen aber um 100 erhöhten Bezugszeichen bezeichnet.

Der Bremsbelag 920 weist an seiner Oberseite Fortsätze 921 auf, die sich paarweise nach oben erstrecken und jeweils weitere Fortsätze 921 aufweisen, die sich aufeinander zu erstrecken. Durch diese Fortsätze 921, 922 ist somit ein Hakenpaar gebildet, das eine Schiene umgreifen kann, die in der durch das Hakenpaar gebildeten Aussparung 923 angeordnet ist. Die Bremszange 910 weist oberhalb des Scheibenraums bzw. des Schachtes eine entsprechende Bremsbelagaufnahme 913 auf, die in der Mitte unterbrochen ist. Bei der gezeigten Ausführung sind die beiden Bremsbelagaufnahmen 913 mit einem Verbindungssteg 9131 miteinander verbunden, der sich quasi wie eine Brücke von der einen Bremsbelagaufnahme 913 zu der gegenüberliegenden Bremsbelagaufnahme 913 erstreckt.

Es ist klar, dass gemäß einer nicht dargestellten Ausführung der Erfindung der Verbindungssteg 9131 wegelassen werden kann. In diesem Fall könnten die beiden Fortsätze 922 miteinander verbunden sein, so dass die Bremsbelagaufnahmen durch den somit gebildeten Ring eingeschlossen werden. Ebenso wie bei den anderen Ausführungen der Erfindung sind die Bremsbelagaufnahmen vorzugsweise einstückig mit der Bremszange ausgebildet, vorzugsweise durch das Formwerkzeug. Wegen der geteilten Ausführung (d.h. in der Ebene der Bremsscheibe) und der Anordnung oberhalb des Scheibenraums ergeben sich die beschriebenen Vorteile der einfachen Montage bzw. des einfachen Wechsels der Bremsbeläge bei einem einfachen Aufbau der Bremszange.

Die Erfindung betrifft somit auch eine Geberarmatur bzw. eine hydraulische Scheibenbremse gemäß einem der folgenden Punkte:
1. Geberarmatur für ein hydraulisches Bremssystem oder Kupplungssystem, insbesondere eines lenkergeführten Fahrzeugs, insbesondere eines Fahrrads, mit einem einen Zylinderraum enthaltenden Gehäuse, in dem ein darin verschiebbarer Kolben und ein Druckraum angeordnet ist, und einem Ausgleichsraum, der über zumindest eine Ausgleichsbohrung mit dem Druckraum verbunden ist, einem das Gehäuse verschließenden Deckel und einem Gegenstück zur Befestigung der Geberarmatur an einem Lenkerrohr, und zumindest einer Verbindungseinrichtung zur Verbindung des Gegenstücks mit dem Gehäuse der Geberarmatur,
   dadurch gekennzeichnet, dass die zumindest eine Verbindungseinrichtung einen ersten Verbindungsabschnitt zur Verbindung des Deckels mit dem Gehäuse der Geberarmatur und einen zweiten Verbindungsabschnitt zur Verbindung des Gegenstücks mit der Geberarmatur und zur Befestigung der Geberarmatur an einem Lenkerrohr aufweist.
2. Geberarmatur nach Punkt 1, bei der zwischen dem ersten Verbindungsabschnitt und dem zweiten Verbindungsabschnitt der zumindest einen Verbindungseinrichtung ein Bund vorgesehen ist.
3. Hydraulische Scheibenbremse für ein lenkergeführtes Fahrzeug, insbesondere ein Fahrrad und/oder Motorrad, die eine Bremsscheibenanordnung (1) mit einem Adapter (10) und einer Bremsscheibe (20) aufweist, wobei der Adapter (10) eine Innenverzahnung (11) zur verdrehsicheren Verbindung mit einer Radnabe des lenkergeführten Fahrzeugs und Mitnehmer (12) zur verdrehsicheren Verbindung mit der Bremsscheibe (20) aufweist,
   dadurch gekennzeichnet, dass die Bremsscheibenanordnung (1) ein Verbindungsglied (30) zur verliersicheren Verbindung der Bremsscheibe (20) mit dem Adapter (10) aufweist.
4. Hydraulische Scheibenbremse nach Punkt 3, bei der die Bremsscheibe (20) zwischen dem Adapter (10) und dem Verbindungsglied (30) angeordnet ist und/oder das Verbindungsglied (30) zumindest ein Verbindungselement (31) aufweist, das durch eine Öffnung (22) der Bremsscheibe (20) verlaufend und mit dem Adapter (10) in Eingriff anordbar ist.
5. Hydraulische Scheibenbremse nach einem der vorhergehenden Punkte, bei der das Verbindungsglied (30) zumindest ein Sicherungselement (32) zur Verdrehsicherung einer Zentralschraube (40) aufweist, mit der die Bremsscheibenanordnung (1) an einer Radnabe befestigbar ist.
6. Hydraulische Scheibenbremse für ein lenkergeführtes Fahrzeug, insbesondere ein Fahrrad und/oder Motorrad, die eine Bremszange (110) mit einem Druckraum (114), einer Hydraulikanschlussbohrung (111) und zumindest einem Hydraulikkanal (112), der von einem Verbindungsabschnitt (113) der Hydraulikanschlussbohrung (111) zu dem zumindest einen Druckraum (114) verläuft, eine Bremsleitung (120), ein mit der Bremsleitung (120) verbundenes Anschlussglied (130), das einen ringförmigen Kopf (131) aufweist, und ein in der Hydraulikanschlussbohrung (111) angeordnetes Verbindungsglied (140) aufweist, wobei das Verbindungsglied (140) einen Verbindungsbereich (141) aufweist, der in dem Kopf (131) zur hydraulischen Verbindung der Bremsleitung (120) mit dem Verbindungsglied (140) angeordnet ist,
   dadurch gekennzeichnet, dass das Verbindungsglied (140) eine Außenverzahnung (142) und/oder an seinem Außenbereich zumindest eine Nut und/oder Abflachung aufweist, die den Verbindungsbereich (141) mit dem Verbindungsabschnitt (113) hydraulisch verbindet.
7. Hydraulische Scheibenbremse nach Punkt 6, bei der zwischen dem ringförmigen Kopf (131) des Anschlussglieds (130) und dem Verbindungsbereich (141) des Verbindungsglieds (140) Dichtungselemente (134, 135) vorgesehen sind, die in axialer Richtung des Verbindungsglieds (140) und gegebenenfalls in radialer Richtung des Verbindungsglieds (140) abdichten.
8. Hydraulische Scheibenbremse für ein lenkergeführtes Fahrzeug, insbesondere ein Fahrrad und/oder Motorrad, mit einer Bremszange (110), die einen Druckraum (114), eine Hydraulikanschlussbohrung (111) und zumindest einen Hydraulikkanal (112) aufweist, der von einem Verbindungsabschnitt (113) der Hydraulikanschlussbohrung (111) zu dem zumindest einen Druckraum (114) verläuft, einer Bremsleitung (120) und einem mit der Bremsleitung (120) verbundenen Anschlussglied (130), das einen ringförmigen Kopf (131) aufweist,
   dadurch gekennzeichnet, dass die Hydraulikanschlussbohrung (111) in einer Richtung (152) verläuft, die einen Winkel (α) von ungefähr 5 bis 30 Grad relativ zu der Richtung (151) des zumindest einen Bremszangenzylinders (118) aufweist, und/oder dadurch gekennzeichnet, dass sich das Anschlussglied (130) in einer Richtung (154) erstreckt, die einen Winkel (α) von ungefähr 5 bis 30 Grad relativ zu einer Richtung (153) aufweist, die senkrecht zu der Richtung (151) der Achse des zumindest einen Bremszangenzylinders (118) ist.
9. Hydraulische Scheibenbremse nach dem vorhergehenden Punkt, bei der der Winkel (α) zwischen der Richtung der Hydraulikanschlussbohrung (111) und der Richtung (151) des zumindest einen Bremszangenzylinders (118) ungefähr 5 bis 20 Grad und vorzugsweise ungefähr 10 Grad beträgt, und oder bei der der Winkel zwischen der Richtung (154), in der sich das Anschlussglied (130) erstreckt, und der Richtung (153), die senkrecht zu der Richtung (151) der Achse des zumindest einen Bremszangenzylinders (118) ist, ungefähr 5 bis 20 Grad und vorzugsweise ungefähr 10 Grad beträgt.
10. Geberarmatur für ein hydraulisches Bremssystem mit einem Zylinderraum, in dem ein Druckraum angeordnet ist, und einem Ausgleichsraum, der über zumindest eine Ausgleichsbohrung mit dem Druckraum verbunden ist,
   dadurch gekennzeichnet, dass zumindest eine weitere Ausgleichsbohrung vorgesehen ist, die den Druckraum mit dem Ausgleichsraum verbindet, und/oder der Ausgleichsraum zwischen der zylinderförmigen Wand des Zylinderraums und der Gehäusewand des den Zylinderraum aufnehmenden Gehäuses der Geberarmatur vorgesehen ist, und/oder
   dadurch gekennzeichnet, dass zwischen der den Zylinderraum abgrenzenden zylinderförmigen Wand und einer den Ausgleichsraum definierenden Wandung (die insbesondere eine Wand des Gehäuses der Geberarmatur sein kann) zumindest ein Steg und/oder eine Rippe vorgesehen ist, die die Ausgleichsraumwand mit der Zylinderraumwand verbindet, und/oder
   dadurch gekennzeichnet, dass der Ausgleichsraum zumindest teilweise die zylinderförmige Wand des Zylinderraums umschließt, und/oder
   dadurch gekennzeichnet, dass der Ausgleichsraum in zumindest zwei Sektoren unterteilt ist, die seitlich von der zylinderförmigen den Zylinderraum begrenzenden Wand angeordnet sind.
11. Hydraulische Scheibenbremse mit einer Bremszange, die einen Scheibenraum und eine Bremsbelagaufnahme aufweist, die oberhalb des Scheibenraums angeordnet ist, wobei die Bremszange zwei Seitenabschnitte aufweist, die den Scheibenraum seitlich begrenzen, und einen Hydraulikanschlussbereich aufweist, der die beiden Seitenbereiche mit einander verbindet, dadurch gekennzeichnet, dass die Bremszange einen Verbindungsabschnitt zur Verbindung der beiden Seitenabschnitte aufweist, wobei die Bremsbelagaufnahme zwischen dem Hydraulikanschlussabschnitt und dem Verbindungsabschnitt angeordnet ist.
12. Hydraulische Scheibenbremse nach Punkt 11, bei der der Verbindungsabschnitt bezogen auf den Zylinderraum außermittig angeordnet ist.
13. Hydraulische Scheibenbremse nach einem der Punkte 11 bis 12, bei der der Verbindungsabschnitt mit dem Hydraulikanschlussabschnitt einen Winkel von weniger als 120°, vorzugsweise von weniger als 100°, weiter vorzugsweise von weniger als 90°, weiter vorzugsweise von weniger als 80° und bevorzugt von ungefähr 70° einschließt.
14. Hydraulische Scheibenbremse nach einem der Punkte 11 bis 13, bei der der Hydraulikanschlussabschnitt und der Verbindungsabschnitt einen Winkel von mehr als 50°, vorzugsweise von mehr als 60° und bevorzugt von ungefähr 70° einschließen.
15. Hydraulische Scheibenbremse nach einem der Punkte 11 bis 14, bei der der Hydraulikanschlussabschnitt und/oder der Verbindungsabschnitt im Wesentlichen entlang einer Tangente des Zylinderraums und/oder im Wesentlichen entlang einer Tangente des Bremszangengehäuses im Bereich des Zylinderraums angeordnet sind.
16. Geberarmatur (300) für eine hydraulische Bremse oder Kupplung, die einen Bremshebel (310) und ein Zylindergehäuse (350) aufweist, in dem ein Kolben (340) verschiebbar angeordnet ist, der über eine Spindel (330) mit dem Bremshebel (310) verbunden ist, wobei die Geberarmatur eine Einstellvorrichtung zum Einstellen der Griffweite und des Druckpunkts aufweist, dadurch gekennzeichnet, dass die Einstellvorrichtung ein Betätigungselement (320) aufweist, mit dem in einer ersten Stellung die Griffweite und in einer zweiten Stellung der Druckpunkt einstellbar ist.
17. Geberarmatur (400) für eine hydraulische Bremse oder Kupplung, die einen Hebel (410), ein Druckstück (470) und ein Zylindergehäuse (450) aufweist, in dem ein Kolben (440) verschiebbar angeordnet ist, wobei der Kolben (440) mit dem Druckstück (470) über eine Spindel (430) verbunden ist, wobei die Geberarmatur (400) eine Einstellvorrichtung (420) zum Einstellen der Griffweite durch Verstellen des Winkels zwischen dem Hebel (410) und dem Druckstück (470) aufweist, wobei sich die Einstellvorrichtung (420) auf dem Druckstück abstützt, dadurch gekennzeichnet, dass die Einstellvorrichtung (420) einen Abstandshalter (422) aufweist, der sich auf dem Druckstück (470) abstützt und der durch das Druckstück (470) gegen eine Verdrehung gesichert ist.
18. Geberarmatur (500) für eine hydraulische Bremse oder Kupplung, die einen Hebel (510) und ein Zylindergehäuse (550) aufweist, in dem ein Kolben (540) verschiebbar angeordnet ist, wobei der Kolben (540) über eine Spindel mit dem Hebel (410) verbunden ist, wobei die Geberarmatur (500) eine Druckpunkteinstellvorrichtung (520) aufweist, dadurch gekennzeichnet, dass die Druckpunkteinstellvorrichtung (520) derart angeordnet und ausgebildet ist, dass der Endanschlag des Kolbens (54) an dem Gehäuse (550) einstellbar ist.
19. Geberarmatur (500) nach Punkt 18, bei der die Druckpunkteinstellvorrichtung (520) ein mit dem Gehäuse (550) drehfestes Anschlagglied (521) aufweist, das axial gegenüber dem Gehäuse (550) verschiebbar angeordnet ist, und/oder das die Einstellvorrichtung (520) ein Einstellglied (522) aufweist, das relativ zu dem Zylindergehäuse (550) verdrehbar angeordnet ist, und dessen Bewegung in axialer Richtung bezogen auf den Zylinder begrenzt ist.
20. Geberarmatur (600) für eine hydraulische Bremse oder Kupplung, die einen Hebel (610, 710) und ein Zylindergehäuse (610, 710) aufweist, in dem ein Kolben (640, 740) verschiebbar angeordnet ist, dadurch gekennzeichnet, dass der Kolben (640, 740) gegen Drehen in dem Zylindergehäuse (650, 750) gesichert ist, und dass die Kolbenlageerfassungseinrichtung (680, 780) ein bezogen auf den Umfang des Kolbens (640, 740) asymmetrisch angeordnetes Signalglied und ein dem Signalglied zugeordnetes und/oder gegenüberliegendes Erfassungsglied aufweist.
21. Hydraulische Scheibenbremse mit einer Bremszange (810, 910), die einen Scheibenraum und eine Bremsbelagaufnahme (813, 913) aufweist, die oberhalb des Scheibenraums angeordnet ist, dadurch gekennzeichnet, dass die Bremsbelagaufnahme einen Abstand zu der Mittelebene des Scheibenraums aufweist, der größer oder gleich der Hälfte der Dicke eines Bremsbelags ist.
22. Hydraulische Scheibenbremse nach Punkt 21, dadurch gekennzeichnet, dass die Bremszange (810) einen Schacht zur Aufnahme des Bremsbelags aufweist, wobei die Bremsbelagaufnahme (813) an in Umfangsrichtung des Scheibenraums (bezogen auf die Laufrichtung des Laufrads bzw. der Bremsscheibe) gegenüberliegenden Seiten des Schachtes ausgebildet ist.
23. Hydraulische Scheibenbremse nach Punkt 21, dadurch gekennzeichnet, dass die Bremszange (910) einen Schacht zur Aufnahme des Bremsbelags aufweist, wobei die Bremsbelagaufnahme (913) in Umfangsrichtung des Scheibenraums (bezogen auf die Laufrichtung des Laufrads bzw. der Bremsscheibe) mittig zu dem Schacht ausgebildet ist.
24. Hydraulische Scheibenbremse nach einem der Punkte 21 bis 24, dadurch gekennzeichnet, dass die Bremsbelagaufnahme (813; 913) Führungen aufweist, die in entsprechende Aufnahmen der Bremsbeläge eingreifen und von diesen teilweise umschlossen werden.
25. Bremsbelag (820; 920) für eine hydraulische Bremse mit einer Bremszange (810; 910), die einen Scheibenraum aufweist, gemäß einem der Punkte 21 bis 24, wobei der Bremsbelag (820; 920) Fortsätze (821, 822, 921, 922) zum Umschließen einer Bremsbelagaufnahme (813; 913) der Bremszange (810; 910) aufweist, dadurch gekennzeichnet, dass die Fortsätze (821, 822, 921, 922) derart angeordnet und ausgebildet sind, dass der Bremsbelag (820; 920) aus einer Lage in der Mittelebene des Scheibenraums der Bremszange zur Seite auf die Bremsbelagaufnahme (813; 913) verschiebbar ist.
26. Bremsbelag (820) nach Punkt 25, wobei die Fortsätze (821, 822) paarweise seitlich und oberhalb des Bereichs angeordnet sind, in dem der Reibbelag vorgesehen ist.
27. Bremsbelag (920) nach Punkt 25, wobei die Fortsätze (921, 922) oberhalb des Bereichs angeordnet, in dem der Reibbelag vorgesehen ist, wobei die Fortsätze (921, 922) vorzugsweise ein Bügelpaar zum Einhängen des Reibbelags auf der Bremsbelagaufnahme bilden.
28. Hydraulische Bremse, insbesondere Scheibenbremse mit einer Bremsscheibenanordnung gemäß einem der Punkte 3 bis 5 und/oder einer Bremszange gemäß den Merkmalen von einem Punkt oder einer Kombination mehrerer Punkte der Punkte 6 bis 9 und 21 bis 24 und/oder einem Bremsbelag gemäß den Merkmalen von einem Punkt oder einer Kombination mehrerer Punkte der Punkte 25 bis 27 und/oder einer Geberarmatur gemäß den Merkmalen von einem Punkt oder einer Kombination mehrerer Punkte der Punkte 1 bis 2 und 10 bis 20.

## Patentansprüche

1. Hydraulische Scheibenbremse für ein lenkergeführtes Fahrzeug, insbesondere ein Fahrrad und/oder Motorrad, die eine Bremsscheibenanordnung (1) mit einem Adapter (10) und einer Bremsscheibe (20) aufweist, wobei der Adapter (10) eine Innenverzahnung (11) zur verdrehsicheren Verbindung mit einer Radnabe des lenkergeführten Fahrzeugs und Mitnehmer (12) zur verdrehsicheren Verbindung mit der Bremsscheibe (20) aufweist,
**dadurch gekennzeichnet, dass** die Bremsscheibenanordnung (1) ein Verbindungsglied (30) zur verliersicheren Verbindung der Bremsscheibe (20) mit dem Adapter (10) aufweist.

2. Hydraulische Scheibenbremse nach Anspruch 1, bei der die Bremsscheibe (20) zwischen dem Adapter (10) und dem Verbindungsglied (30) angeordnet ist und/oder das Verbindungsglied (30) zumindest ein Verbindungselement (31) aufweist, das durch eine Öffnung (22) der Bremsscheibe (20) verlaufend und mit dem Adapter (10) in Eingriff anordbar ist.

3. Hydraulische Scheibenbremse nach einem der vorhergehenden Ansprüche, bei der das Verbindungsglied (30) zumindest ein Sicherungselement (32) zur Verdrehsicherung einer Zentralschraube (40) aufweist, mit der die Bremsscheibenanordnung (1) an einer Radnabe befestigbar ist.

4. Hydraulische Scheibenbremse nach einem der vorhergehenden Ansprüche, bei der die Bremsscheibe mit dem Adapter eine Einheit bildet, bei der die Bremsscheibe verliersicher mit dem Adapter verbindbar ist.

5. Hydraulische Scheibenbremse nach einem der vorhergehenden Ansprüche, bei der die Bremsscheibe durch das Verbindungsglied in einer zumindest im Wesentlichen bezogen auf die Radnabe axialen Richtung mit dem Adapter verbindbar ist.

6. Hydraulische Scheibenbremse nach einem der vorhergehenden Ansprüche, bei der der Adapter mit der Bremsscheibe nur lose verbindbar ist.

7. Hydraulische Scheibenbremse nach einem der vorhergehenden Ansprüche, bei der die Bremsscheibenanordnung Rast- und/oder Sicherungsmittel aufweist, wobei die Rast- und/oder Sicherungsmittel vorzugsweise Haken bzw. Rasthaken umfassen, die Teil eines Federrings sind, wobei vorzugsweise die Haken bzw. Rasthaken durch Öffnungen der Bremsscheibe hindurch greifen und eine Schulter des Adapters hintergreifen.

8. Hydraulische Scheibenbremse nach einem der vorhergehenden Ansprüche, bei der der Mitnehmer bzw. die Mitnehmer des Adapters in axialer Richtung vorstehen, vorzugsweise um die Dicke der Bremsscheibe, so dass sich eine ebene Fläche aus der Bremsscheibe und den Mitnehmern ergibt, die in die Bremsscheibe eingreifen.

9. Hydraulische Scheibenbremse nach einem der vorhergehenden Ansprüche, bei der die Mitnehmer des Adapters zwischen Öffnungen der Bremsscheibe eingreifen, die zur Befestigung der Bremsscheibe mit Schrauben an herkömmlichen Naben dienen.

10. Hydraulische Scheibenbremse nach einem der vorhergehenden Ansprüche, bei der die Sicherungsmittel des Verbindungsglieds entlang der Außenfläche des Adapters verlaufen, und zwar vorzugsweise in einem Abstand von der Achse, der den Abstand der Öffnungen der Bremsscheibe entspricht, die zur Befestigung der Bremsscheibe mit Schrauben an herkömmlichen Naben dienen.

11. Hydraulische Scheibenbremse nach einem der vorhergehenden Ansprüche, bei der die Mitnehmer außen an dem Adapter angebracht sind und sich von diesem in Richtung der Bremsscheibe erstrecken, und zwar vorzugsweise um eine Länge, die der Dicke der Bremsscheibe entspricht.

12. Hydraulische Scheibenbremse nach einem der vorhergehenden Ansprüche, bei der die Bremsscheibe zwischen dem Adapter und dem Verbindungsglied angeordnet ist und/oder das Verbindungsglied zumindest ein Verbindungselement aufweist, das durch eine Öffnung der Bremsscheibe verlaufend und mit dem Adapter in Eingriff anordbar ist.

13. Hydraulische Scheibenbremse nach einem der vorhergehenden Ansprüche, bei der das zumindest eine Verbindungselement kann ein Haken bzw. ein mit einem Haken und/oder einer Hinterschneidung versehener Vorsprung bzw. Arm ist, der sich insbesondere bezogen auf die Radnabe in axialer Richtung erstreckt, wobei das Verbindungselement vorzugsweise eine derartige Abmessung aufweist, dass es durch die Befestigungsöffnungen einer herkömmlichen Bremsscheibe stecktbar ist.

14. Hydraulische Scheibenbremse nach einem der vorhergehenden Ansprüche, bei der Erfindungsgemäß kann das Verbindungsglied zumindest ein Sicherungselement zur Verdrehsicherung einer Zentralschraube aufweisen, mit der die Bremsscheibenanordnung an einer Radnabe befestigbar ist.

15. Hydraulische Scheibenbremse nach einem der vorhergehenden Ansprüche, bei der das Verbindungsglied einen Ring aufweist, der parallel zur Bremsscheibe angeordnet ist, wobei das zumindest eine Sicherungselement auf der Außenseite des Rings angeordnet ist, wobei das Verbindungsglied vorzugsweise mehrere Sicherungselemente aufweist, die vorzugsweise im Wesentlichen gleichmäßig auf dem Ring verteilt sind, wobei der Ring Bereiche aufweist, in denen die Sicherungselemente angeordnet sind, wobei der Ring in diesen Bereichen vorzugsweise breiter ausgebildet ist bzw. Fortsätze aufweist, wobei zwischen diesen Bereichen die Verbindungselemente anordbar sind.
